# NEUE EUROPÄISCHE PATENTSCHRIFT

(11) **EP 2 300 198 B2**
(45) Veröffentlichungstag und Bekanntmachung des Hinweises auf die Entscheidung über den Einspruch: **21.03.2018**
(45) Hinweis auf die Patenterteilung: 02.07.2014
(21) Anmeldenummer: 09741907.1
(22) Anmeldetag: 11.05.2009
(51) Int. Cl.: B24B 13/005

(54) **VORRICHTUNG ZUM BLOCKEN VON WERKSTÜCKEN, INSBESONDERE BRILLENGLÄSERN, FÜR DEREN BEARBEITUNG UND/ODER BESCHICHTUNG**
DEVICE FOR BLOCKING WORKPIECES, PARTICULARLY SPECTACLE LENSES, FOR THE PROCESSING AND/OR COATING THEREOF
DISPOSITIF POUR LE GLANTAGE DE PIECES, EN PARTICULIER DE VERRES DE LUNETTES, EN VUE DE LEUR USINAGE ET/OU DE LEUR SURFACAGE

(30) Priorität: 09.05.2008 DE 102008023093
(43) Veröffentlichungstag der Anmeldung: 30.03.2011
(73) Patentinhaber: Satisloh AG, 6340 Baar (CH)
(72) Erfinder: SAVOIE, Marc, 35578 Wetzlar (DE); SCHÄFER, Holger, 35789 Weilmünster (DE); WALLENDORF, Steffen, 35398 Giessen Kleinlinden (DE); JOST, Peter, 35644 Hohenahr / Mudersbach (DE); WAGNER, Jochen, 35649 Bischoffen (DE)
(74) Vertreter: Oppermann, Mark
(86) Internationale Anmeldenummer: PCT/EP2009/003324
(87) Internationale Veröffentlichungsnummer: WO 2009/135689

(56) Entgegenhaltungen:
- EP-A- 1 691 129
- EP-A2- 1 093 907
- WO-A2-2004/015482
- DE-A1- 3 930 503
- DE-A1-102004 021 696
- US-A1- 2005 173 046

## Beschreibung

### TECHNISCHES GEBIET

Die vorliegende Erfindung bezieht sich allgemein auf eine Vorrichtung zum Blocken von Werkstücken für deren (weitere) Bearbeitung und/oder (weitere) Beschichtung, gemäß dem Oberbegriff des Patentanspruchs 1, wobei der resultierende sogenannte "Block" dazu dient, das Werkstück in der jeweiligen Bearbeitungsmaschine und/oder Beschichtungsanlage zu halten.

Insbesondere bezieht sich die Erfindung auf eine Vorrichtung zum Blocken von Brillengläsern, die in sogenannten "RX-Werkstätten" massenweise zu blocken sind, bevor das jeweilige geblockte Brillenglas an seiner Rück- oder Frontfläche im Hinblick auf seine optische Wirkung und/oder am Rand zur Einpassung in ein zugeordnetes Brillengestell mit geometrisch bestimmter (Fräsen/Drehen) oder geometrisch unbestimmter (Schleifen/Polieren) Schneide spanend bearbeitet und/oder auf seiner Rück- oder Frontfläche zur Erzielung zusätzlicher Wirkungen (Erhöhung der Kratzfestigkeit, Antireflexionseigenschaften, Verspiegelung, hydrophobe Eigenschaften, etc.) beschichtet wird.

Wenn nachfolgend im Zusammenhang mit der vorliegenden Erfindung als bevorzugtem Anwendungsgebiet allgemein von "Brillengläsern" die Rede ist, sind darunter optische Linsen bzw. Linsenrohlinge (Blanks) für Brillen aus den gebräuchlichen Materialien, wie Polycarbonat, Mineralglas, CR 39, HI-Index, etc. und mit beliebiger (Vor)Form des Umfangsrandes der Linse bzw. des Linsenrohlings zu verstehen, die vor dem Blocken bereits an einer oder beiden optisch wirksamen Fläche(n) und/oder am Rand (vor)bearbeitet und/oder (vor)beschichtet sein können aber nicht müssen. Auch kann das Brillenglas auf seiner Fläche, an der es geblockt wird, mit einer Folie, einem Lack od.dgl. versehen sein, um diese Fläche vor Verunreinigung und Beschädigung zu schützen und/oder die Haftungseigenschaften zwischen Brillenglas und Blockmaterial zu verbessern, ohne dass dies im Folgenden jeweils eigens erwähnt wird.

### STAND DER TECHNIK

Die Druckschriften US 5,919,080, US 6,012,965 sowie die den Oberbegriff des Patentanspruchs 1 bildende US 2005/0173046 A1 beschreiben einen Brillenglasblocker, der zum Befestigen eines Brillenglases auf einem Blockstück entworfen wurde, ohne dass dabei das Brillenglas das Blockstück oder einen Blockring berührt. Diese Blockvorrichtungen verwenden eine manuelle Brillenglas-Abbild/Ausrichtstation, in Verbindung mit zwei Achsen für eine automatische Bewegungssteuerung für einen Brillenglas-Aufnahmekopf, um das Brillenglas in einer vorbestimmten Höhe und Lage über dem Blockstück zu positionieren. In der einfachsten Form dieser Vorrichtungen beginnt die Bedienperson (nach Eingabe der Job-Daten oder Download derselben von einem Host-Computer) damit, einen Brillenglas-Rohling auf der Abbildstation zu positionieren. Die Abbildstation projiziert eine Draufsicht des Brillenglas-Rohlings auf einen Computerbildschirm, während der Computer gleichzeitig ein Bild der gewünschten Lage und axialen Orientierung des Brillenglas-Rohlings auf dem gleichen Bildschirm einblendet, um diese Bilder zu überlagern.

Die Bedienperson richtet das "echte" Bild des Brillenglas-Rohlings an dem vom Computer erzeugten Idealbild aus. Die gewünschte Position wird vom Computer auf der Grundlage der verschiedenen Job-Daten bestimmt, die entsprechend den vom Kunden am Ende gewünschten Rezeptdaten berechnet wurden. Die Bedienperson kann den Brillenglas-Rohling nach vorne oder hinten bewegen, und ihn in jede gewünschte Winkellage auf der Abbildstation positionieren. Wenn die Bedienperson den Brillenglas-Rohling korrekt ausgerichtet hat, bestätigt sie dies per Tastendruck.

Der Systemcomputer bewegt dann den Brillenglas-Aufnahmekopf vermittels der zwei vorgenannten Bewegungsachsen. Der Aufnahmekopf nimmt das Brillenglas in der Position auf, die die Abbildstation vorgegeben hat und bewegt sie zur Blockstation. Das Blockstück, welches in die Blockstation eingesetzt wurde, wird dabei in der Blockstation in einer festgelegten und bekannten Position relativ zum Maschinenkoordinatensystem gehalten. Ein Blockmaterial kann dann in flüssigem Zustand in die Blockstation fließen, und das Brillenglas wird über die vorgenannten Bewegungsachsen in das flüssige Blockmaterial gesetzt. Das Brillenglas berührt dabei weder das Blockstück noch die Gießform, sondern wird nur durch den Aufnahmekopf gehalten und kann aushärten. Der Aufnahmekopf kann das Brillenglas dann freigeben, und das auf dem Blockstück geblockte Brillenglas kann von der Blockstation entfernt werden.

Bei dem oben beschriebenen Stand der Technik können im Blocker nur vier Freiheitsgrade berücksichtigt werden, um das Brillenglas auf dem Blockstück zu positionieren. Zwei dieser Freiheitsgrade werden von der Bedienperson durch manuelle Einstellung an der Abbildstation bestimmt, während die anderen zwei Freiheitsgrade durch die zwei Bewegungsachsen bereitgestellt werden. Es sind jedoch sechs Freiheitsgrade (drei translatorische und drei rotatorische) erforderlich, um ein Objekt vollständig in einem beliebigen 3D-Koordinatensystem zu positionieren. Demnach fehlen bei dem geschilderten Stand der Technik zwei Freiheitsgrade, um das Brillenglas bezüglich des Blockstücks vollständig zu positionieren, wie es in einem herkömmlichen Blockverfahren mit Blockring zur Auflage des Brillenglases erwartet werden kann.

Im obigen Stand der Technik werden diese "Fehler" kompensiert, indem diese, wenn nicht bekannt, zunächst bestimmt werden, und sodann Korrekturdaten an die nachfolgenden Bearbeitungsmaschinen gesendet werden. Das Bewegungssteuerungssystem dieser nachfolgenden Bearbeitungsmaschinen muss dann die im Blocker fehlenden Freiheitsgrade besitzen, damit die obigen, vom Blocker identifizierten "Fehler" kompensiert werden können. Somit muss die Bearbeitungsmaschine zum Blocker "passen", oder an diesen "angepasst" werden, was den Einsatz dieser Blocker beschränkt.

### AUFGABENSTELLUNG

Demgemäß liegt der Erfindung ausgehend vom Stand der Technik gemäß der US 2005/0173046 A1 die Aufgabe zugrunde, eine Vorrichtung zum Blocken von Werkstücken, insbesondere von Brillengläsern, für deren Bearbeitung und/oder Beschichtung zu schaffen, die möglichst universell eingesetzt werden kann, ohne bestimmte Bearbeitungsmaschinen oder bestimmte Bearbeitungsvorgaben im Folgeprozess zu erfordern.

### DARSTELLUNG DER ERFINDUNG

Diese Aufgabe wird durch die im Patentanspruch 1 angegebenen Merkmale gelöst. Vorteilhafte oder zweckmäßige Weiterbildungen der Erfindung sind Gegenstand der Patentansprüche 2 bis 15.

Erfindungsgemäß weist bei einer Vorrichtung zum Blocken von Werkstücken, insbesondere Brillengläsern, für deren Bearbeitung und/oder Beschichtung, die eine Auflage zum Auflegen des zu blockenden Werkstücks, eine Blockstation, in der das Werkstück mittels eines temporär verformbaren, nämlich lichtaushärtenden oder thermoplastischen Blockmaterials auf einem Blockstück aufblockbar ist, und eine einen Haltekopf für das Werkstück aufweisende Transporteinrichtung umfasst, mittels der eine Relativbewegung zwischen dem am Haltekopf gehaltenen Werkstück einerseits und der Auflage sowie der Blockstation andererseits erzeugbar ist und die zwei lagegeregelte Bewegungsachsen aufweist; die Transporteinrichtung vier weitere lagegeregelte Bewegungsachsen auf, also insgesamt sechs lagegeregelte Bewegungsachsen, nämlich drei im Wesentlichen senkrecht zueinander stehende lagegeregelte Linearachsen und drei im Drehwinkel geregelte Dreh- bzw. Kippachsen um die Linearachsen, mittels der das Werkstück unter Berücksichtigung von Orientierung und Geometrieinformationen des Werkstücks relativ zu einem sich in der Blockstation befindenden Blockstück definiert positionierbar und während des Aufblockens in der definierten Relativlage zum Blockstück unter Belassung eines Blockmaterial-Aufnahmespalts zwischen Werkstück und Blockstück haltbar ist.

Somit werden erfindungsgemäß vier zusätzliche lagegeregelte Bewegungsachsen für den eigentlichen Blockvorgang vorgesehen, um die insgesamt verfügbaren Freiheitsgrade der Blockvorrichtung auf sechs zu erhöhen. Bei korrekter Konfiguration der Blockvorrichtung ist es dann möglich, allgemeine Block-Instruktionen von z.B. einem Lab-Software-System (Host) zu erhalten, und das Brillenglas genau gemäß diesen Instruktionen zu blocken. Es sind dann keine weiteren Kalkulationen oder Kompensationen im Folgeprozess mehr notwendig. Die nachfolgende Bearbeitungsmaschine kann daher ein Brillenglas, das in der erfindungsgemäßen Blockvorrichtung geblockt wurde, problemlos und ohne Mehraufwand behandeln.

Da darüber hinaus während des Aufblockens das Brillenglas in der definierten Relativlage zum Blockstück unter Belassung des Blockmaterial-Aufnahmespalts zwischen Brillenglas und Blockstück gehalten werden kann ("spatial blocking"), kann die Genauigkeit beim Aufblocken einiger problematischer Brillengläser erhöht werden. Dies betrifft z.B. Gleitsichtgläser (PALs), bei denen es sehr schwierig sein kann, diese richtig einzustellen, wenn man sie auf herkömmliche, kreisförmige "Blockringe" auflegt, weil die Gleitsichtkurve nicht sphärisch ist und das Brillenglas somit nicht vollständig bzw. wackelnd auf dem Blockring aufsitzt. Schließlich können mit der erfindungsgemäßen Blockvorrichtung auch unerwünschte prismatische Fehler an dem aufgeblockten Brillenglas zuverlässig vermieden werden.

Weitere Vorteile und Eigenschaften der erfindungsgemäßen Blockvorrichtung ergeben sich für den Fachmann aus der folgenden Beschreibung bevorzugter Ausführungsbeispiele.

### KURZE BESCHREIBUNG DER ZEICHNUNGEN

Im Folgenden wird die Erfindung anhand bevorzugter Ausführungsbeispiele unter Bezugnahme auf die beigefügten, teilweise schematischen Zeichnungen näher erläutert, in denen gleiche Bezugszeichen gleiche bzw. entsprechende Teile kennzeichnen. In den Zeichnungen zeigen:
- Fig. 1: eine perspektivische Ansicht der Blockvorrichtung von links oben;
- Fig. 2: eine perspektivische Ansicht der Blockvorrichtung von rechts oben;
- Fig. 3: eine perspektivische Detailansicht der Blockvorrichtung von rechts oben, wobei zur Vereinfachung der Darstellung die Dosiereinrichtung, die Zufuhreinrichtung, das Magazin für die Blockmaterial-Kartuschen und das Blockstückmagazin weggelassen wurden;
- Fig. 4: eine perspektivische Detailansicht der Blockvorrichtung von rechts oben, wobei sich der erste und der zweite Schlitten der Transporteinrichtung in einer aus dem Gehäuse der Blockvorrichtung herausgefahrenen Übergabeposition für das Werkstück bzw. das Blockstück befinden;
- Fig. 5: eine perspektivische Ansicht wesentlicher Teile der vereinzelt dargestellten Transporteinrichtung von links unten, nämlich des Haltekopfs, der Kreuztischanordnung und der Linsen-Spanneinheit, zur Veranschaulichung von fünf lagegeregelten Bewegungsachsen der Transporteinrichtung;
- Fig. 6: eine der Fig. 5 ähnliche perspektivische Ansicht wesentlicher Teile der vereinzelt dargestellten Transporteinrichtung von rechts oben;
- Fig. 7: eine Unteransicht auf die vereinzelt dargestellte Linsen-Spanneinheit;
- Fig. 8: eine Schnittansicht entsprechend der Schnittverlaufslinie VIII-VIII in Fig. 7;
- Fig. 9: eine Draufsicht auf die Blockvorrichtung gemäß den Fig. 1 und 2;
- Fig. 10: eine Schnittansicht entsprechend der Schnittverlaufslinie X-X in Fig. 9, wobei die Ladeeinheit zur Vereinfachung der Darstellung weggelassen wurde;
- Fig. 11: eine Unteransicht auf vereinzelt dargestellte Teile der Blockstation, nämlich deren Spanneinrichtung;
- Fig. 12: eine Schnittansicht der in Fig. 11 gezeigten Spanneinrichtung der Blockstation entsprechend der Schnittverlaufslinie XII-XII in Fig. 13;
- Fig. 13: eine Draufsicht auf die Spanneinrichtung von Fig. 11;
- Fig. 14A: eine perspektivische Darstellung der Spanneinrichtung der Blockstation gemäß den Fig. 11 bis 13;
- Fig. 14B: eine Explosionsdarstellung der Spanneinrichtung von Fig. 14A;
- Fig. 15: eine perspektivische Darstellung des vereinzelt gezeigten Blockstückmagazins der Blockvorrichtung mit abgenommenem Stapelspeicher;
- Fig. 16: eine teilweise aufgebrochene Draufsicht auf die vereinzelt dargestellte Zufuhreinrichtung der Blockvorrichtung gemäß dem Detail XVI in Fig. 9;
- Fig. 17: eine (in der Zeichnungsebene um 90° gegen den Uhrzeigersinn gedrehte) Schnittansicht der Zufuhreinrichtung von Fig. 16 entsprechend der Schnittverlaufslinie XVII-XVII in Fig. 16, mit fünf Blockmaterial-Kartuschen im Magazin und einer Blockmaterial-Kartusche im Aufnahmeraum der Zufuhreinrichtung;
- Fig. 18: eine der Fig. 1 ähnliche perspektivische Ansicht der Blockvorrichtung von links oben, zur Veranschaulichung der Bewegungsmöglichkeiten der zusätzlich zur Transporteinrichtung vorgesehenen Handhabungs- und Automatisierungseinrichtungen, namentlich der Ladeeinheit, der Vertikaleinheit und des Blockstückmagazins;
- Fig. 19: eine perspektivische Explosionsdarstellung eines Brillenglases und eines Blockstücks, die die Bewegungsfreiheitgrade des Brillenglases bezüglich des Blockstücks illustriert;
- Fig. 20: eine Schnittansicht eines auf einem Blockstück geblockten Brillenglases;
- Fig. 21 bis Fig. 37: perspektivische Ansichten der erfindungsgemäßen Blockvorrichtung, die einen möglichen, vollautomatischen Blockprozess in dessen zeitlichen Ablauf illustrieren;
- Fig. 38: eine Draufsicht auf die Spanneinrichtung der Blockstation in einer zu den Fig. 11 bis 14B alternativen Ausgestaltung, ohne Auflagering für das Blockstück;
- Fig. 39: eine Schnittansicht der alternativen Spanneinrichtung der Blockstation entsprechend der Schnittverlaufslinie XXXIX-XXXIX in Fig. 38, mit einem gläsernen Auflagering und einem in die Spanneinrichtung eingesetzten Blockstück, welches gegenüber dem in den Fig. 10, 12, 19 und 20 näher gezeigten Blockstück geringfügig modifiziert ist;
- Fig. 40: eine perspektivische Darstellung einer vereinzelt gezeigten Zufuhreinrichtung für das Blockmaterial in einer zu insbesondere den Fig. 16 und 17 alternativen Ausgestaltung mit Fasspumpeneinheit; und
- Fig. 41: eine perspektivische Darstellung einer mit dem ersten Schlitten der Transporteinrichtung vereinzelt gezeigten Dosiereinrichtung für das Blockmaterial in einer zu insbesondere den Fig. 1, 4 und 10 alternativen Ausgestaltung mit einem feststehenden, ein Nadelsitzventil aufweisenden Dosierkopf, der über einen Durchflussmesser vermittels eines Schlauchs an der Zufuhreinrichtung gemäß Fig. 40 angeschlossen ist.

In den Figuren, die gleiche Teile auch in verschiedenen Massstäben zeigen, sind zur Vereinfachung der Darstellung Teile der Blockvorrichtung, die für das Verständnis der vorliegenden Erfindung nicht wesentlich sind, wie z.B. Verkleidungen, Bedieneinheit mit Bildschirm und Eingabemöglichkeiten, etc. weggelassen.

### DETAILLIERTE BESCHREIBUNG DER AUSFÜHRUNGSBEISPIELE

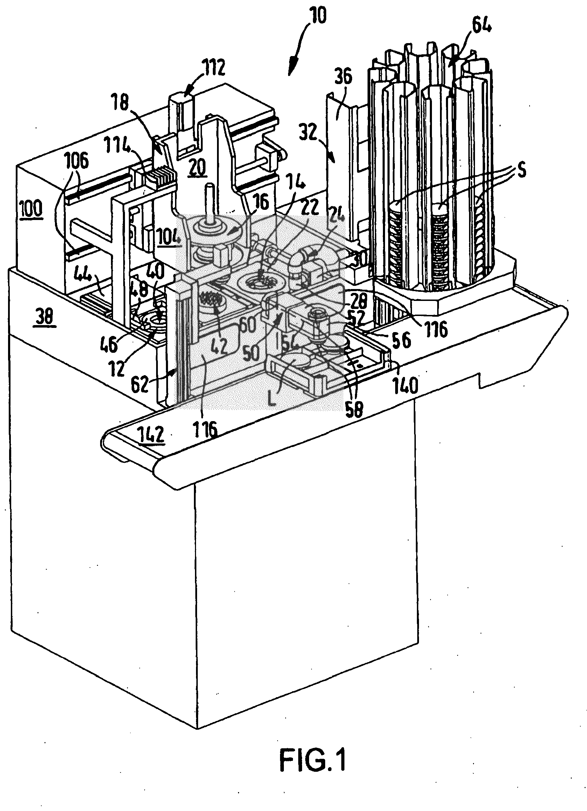

Gemäß insbesondere den Fig. 1 bis 4 umfasst eine Vorrichtung 10 zum Blocken von Brillengläsern L für deren Bearbeitung und/oder Beschichtung, eine Messstation 12 zum Erfassen der Orientierung und von Geometrieinformationen des zu blockenden Brillenglases L, eine Blockstation 14, in der das Brillenglas L mittels eines temporär verformbaren Blockmaterials M auf einem Blockstück S aufblockbar ist, und eine einen Haltekopf 16 für das Brillenglas L aufweisende Transporteinrichtung 18, mittels der eine Relativbewegung zwischen dem am Haltekopf 16 gehaltenen Brillenglas L einerseits und der Messstation 12 sowie der Blockstation 14 andererseits erzeugbar ist.

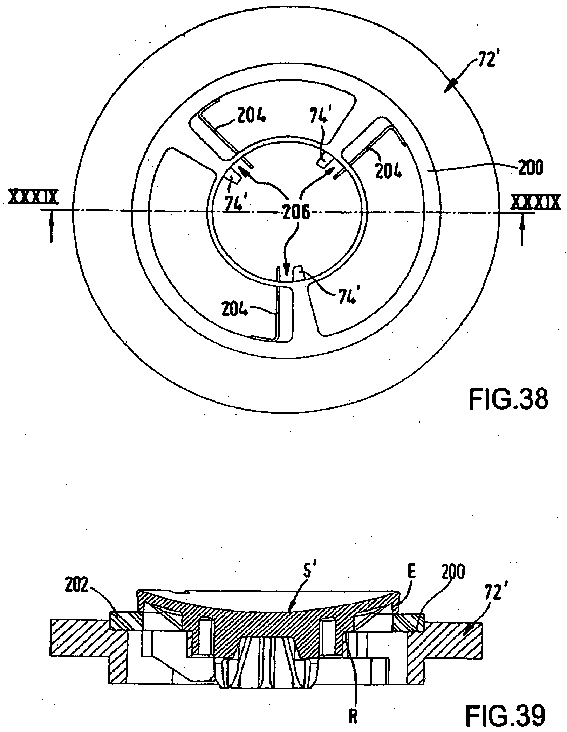

Bei dem temporär verformbaren Blockmaterial M handelt es sich bevorzugt um ein lichtaushärtendes Blockmaterial, welches in der EP 2 011 604 A1 der vorliegenden Anmelderin ausführlich beschrieben wird, auf die hiermit hinsichtlich Beschaffenheit und Eigenschaften des Blockmaterials M ausdrücklich verwiesen wird. Das verwendete Blockstück S hingegen ist in der älteren europäischen Patentanmeldung 08 003 335.0 der vorliegenden Anmelderin ausführlich erläutert, auf die hiermit hinsichtlich Struktur und Funktion des Blockstücks S ebenfalls ausdrücklich verwiesen wird; soweit dieses Blockstück S noch geringfügig modifiziert wurde, wird dies nachfolgend unter Bezugnahme auf die Fig. 39 noch erläutert werden.

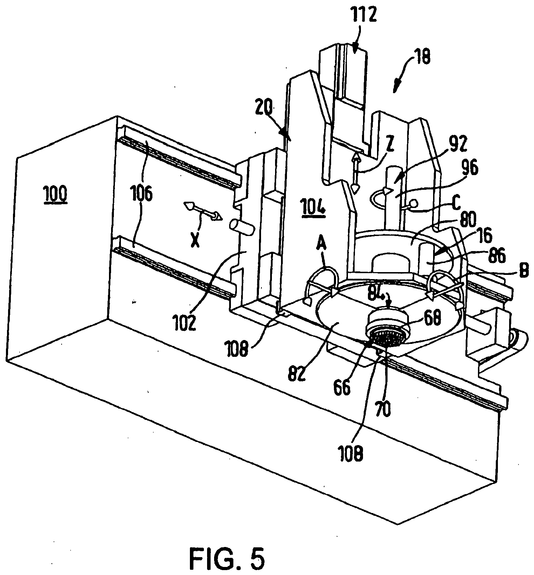

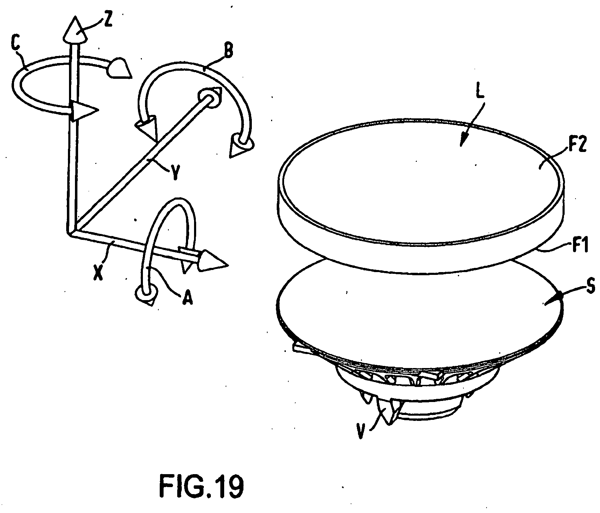

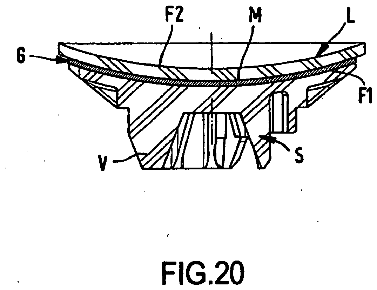

Wesentlich ist, dass die Transporteinrichtung 18 der Blockvorrichtung 10 sechs lagegeregelte (CNC) Bewegungsachsen X, Y, Z, A, B, C (siehe die Fig. 5, 6 und 10), nämlich drei im wesentlichen senkrecht zueinander stehende lagegeregelte Linearachsen X, Y, Z und drei im Drehwinkel geregelte Dreh- bzw. Kippachsen A, B, C um die Linearachsen X, Y, Z, aufweist, mittels der das Brillenglas L unter Berücksichtigung der - ggf. in der Messstation 12 erfassten oder anderweitig bekannten - Orientierung und Geometrieinformationen des Brillenglases L relativ zu einem sich in der Blockstation 14 befindenden Blockstück S definiert positionierbar und während des Aufblockens in der definierten Relativlage zum Blockstück S unter Belassung eines Blockmaterial-Aufnahmespalts G (Fig. 20) zwischen Brillenglas L und Blockstück S haltbar ist. Die Fig. 19 illustriert hierbei die mit Hilfe der Blockvorrichtung 10 möglichen Relativbewegungen zwischen dem Brillenglas L und dem Blockstück S vor dem Aufblocken.

Der Haltekopf 16 für das Brillenglas L ist dabei im Raum im Drehwinkel geregelt dreh- und kippbar (Kippachsen A, B, Drehachse C) ausgebildet. Durch die Drehachse C ist es möglich, das Brillenglas L - ggf. nach Erfassung in der Messstation 12 und Erkennen der Lage des Brillenglases L - gemäß ihrer Winkellage zur Rezept-Torusachse auszurichten. Bezüglich konstruktiver Details des Haltekopfs 16 im Hinblick auf dessen Verstellmöglichkeiten soll an dieser Stelle zunächst ausdrücklich auf die Druckschrift DE 39 30 503 A1 verwiesen werden.

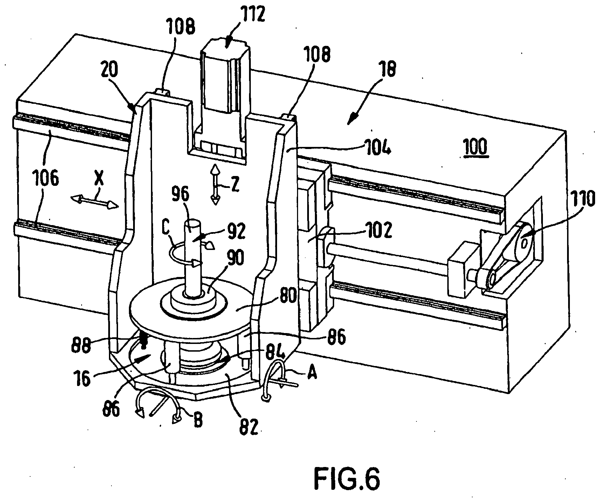

Gemäß insbesondere den Fig. 5 und 6 weist der Haltekopf 16 eine obere Platte 80 auf, die relativ zu einer unteren Platte 82 des Haltekopfs 16 im Drehwinkel geregelt verkippbar ist, und zwar um die Kippachsen A und B. Hierfür ist im Zentrum der unteren Platte 82 ein Kugelkalottengelenk 84 vorgesehen. Zwei unter 90° zwischen den Platten 80, 82 angeordnete Antriebe 86 dienen der Verkippung (Kippachsen A und B) der oberen Platte 80 gegen die Kraft von Zugfedern 88, die zwischen die Platten 80, 82 gespannt sind und von denen in Fig. 6 eine Zugfeder 88 exemplarisch dargestellt ist. Ein weiterer Antrieb 90 ist auf der oberen Platte 80 vorgesehen und dient zum im Drehwinkel geregelten Verdrehen einer Hohlwelle 92 (Drehachse C).

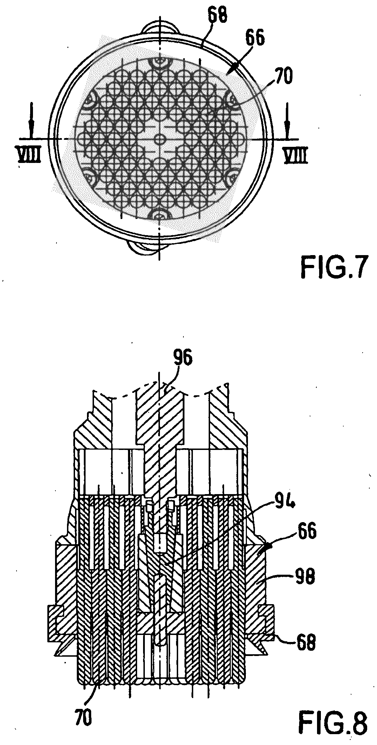

In der Hohlwelle 92 befestigt ist eine in den Fig. 7 und 8 näher gezeigte Linsen-Spanneinheit 66, die eine Saugerlippe 68 zum Ansaugen des Brillenglases L aufweist, welche ein Stiftrelief 70 umschließt, das einer Kontaktfläche F2 des Brillenglases L anpassbar und wahlweise klemmbar ist, um das Brillenglas L an dessen Kontaktfläche F2 möglichst vollflächig abzustützen. Auf diese Weise ist es möglich, das gespannte Brillenglas L in zwei Achsen (A, B) zu verkippen und in einer weiteren Achse (C) zu verdrehen.

Zur Klemmung des Stiftreliefs 70 ist ein zentral angebrachter konischer Spreizdorn 94 vorgesehen, welcher über einen pneumatischen Hubzylinder 96 axial verschiebbar ist. Der Hubzylinder 96 bewirkt bei Druckbeaufschlagung eine axiale Bewegung des konischen Spreizdorns 94, die ihrerseits eine von innen nach außen gerichtete radiale Kraft auf die Stifte des Stiftreliefs 70 ausübt. Da alle Stifte dicht gepackt in einer Hülse 98 geführt sind, wird diese Klemmkraft von Stift zu Stift übertragen. Hierdurch verklemmen sich die Stifte in der Hülse 98 und werden axial unbeweglich. Die Stifte werden dabei lediglich durch ihr Eigengewicht nach unten geschoben und können sich im ungeklemmten Zustand an der Kontaktfläche F2 des Brillenglases L anlegen. Hierdurch ist es den Stiften möglich, sich an beliebige Topografien von Brillenglasflächen anzupassen und diese abzustützen, indem der gesamte Haltekopf 16 axial auf das Brillenglas L zu bewegt wird, bis ein Unterdruckschalter (nicht dargestellt) feststellt, dass die Saugerlippe 68 an der Kontaktfläche F2 des Brillenglases L anliegt. In dieser Position wird der Axialvorschub (Linearachse Z) für den Haltekopf 16 abgeschaltet und der Hubzylinder 96 mit Druck beaufschlagt. Nach dem Klemmen des Stiftreliefs 70 ist das angesaugte Brillenglas L ortsfest zur Linsen-Spanneinheit 66 fixiert, wobei auch größere axiale oder radiale Kräfte auf das Brillenglas L ausgeübt werden können, ohne dessen räumliche Lage gegenüber der Linsen-Spanneinheit 66 zu verändern. Durch diese besondere Ausgestaltung des Haltekopfs 16 können Brillengläser L mit beliebiger Geometrie angesaugt und unter Beibehaltung ihrer Position mittels der Transporteinrichtung 18 transportiert werden, wobei auch größere Kräfte, die z.B. beim Aufblockvorgang auf das Brillenglas L einwirken, übertragen werden können.

Wie des weiteren den Fig. 1 bis 6 zu entnehmen ist, ist der Haltekopf 16 für das Brillenglas L vermittels einer Kreuztischanordnung 20 der Transporteinrichtung 18 in Richtung auf ein sich in der Blockstation 14 befindendes Blockstück S zu und davon weg (Z-Achse) sowie quer dazu (X-Achse) lagegeregelt bewegbar. Die Kreuztischanordnung 20 besteht aus einer Basis 100, einem Horizontalschlitten 102 und einem Vertikalschlitten 104, die voreinander angeordnet sind. Der Horizontalschlitten 102 ist über ein Paar horizontal verlaufender Führungsschienen 106 und zugeordneten Wagen an der Basis 100 geführt, während der Vertikalschlitten 104 über ein Paar vertikal verlaufender Führungsschienen 108 und zugeordneten Wagen am Horizontalschlitten 102 geführt ist. Jedem der Schlitten 102, 104 ist ein Antrieb 110, 112, z.B. ein Schrittmotor mit Kugelgewindetrieb, zugeordnet, über den der jeweilige Schlitten 102, 104 lagegeregelt linear verschiebbar ist (Linearachsen X und Z). Die hierfür erforderliche Sensorik (Drehgeber, Längenmesssystem, etc.) ist, wie auch bei den Dreh- bzw. Kippachsen A, B, C im Haltekopf 16, in den Figuren nicht gezeigt.

Wie insbesondere die Fig. 1, 3, 4 und 10 zeigen, ist die Blockstation 14 auf einem ersten Schlitten 22 der Transporteinrichtung 18 angeordnet, der quer (Y-Achse) zum Haltekopf 16 für das Brillenglas L lagegeregelt bewegbar ist. Hierdurch wird die sechste Achse, d.h. die lagegeregelte Linearachse Y der Transporteinrichtung 18 realisiert. Für den ersten Schlitten 22 sind natürlich gleichermaßen ein Antrieb, Führungen und eine zugeordnete Sensorik vorgesehen, die in den Figuren aber nicht dargestellt sind. Beim Blocken kann mit dieser Achse (und/oder der Linearachse X) das Brillenglas L optional dezentriert geblockt werden.

Gemäß insbesondere den Fig. 1 bis 4 weist die - im dargestellten Ausführungsbeispiel vorgesehene, bei anderweitigem (z.B. durch Eingabe oder Datenübertragung an die Blockvorrichtung 10) Erhalt der entsprechenden Daten aber entbehrliche - Messstation 12 eine optische Messeinrichtung 40 zur Lageerkennung des Brillenglases L und eine hiervon beabstandete mechanische Messeinrichtung 42 zum vollflächigen Messen der zu blockenden Werkstückfläche F1 auf, wobei das zu blockende Brillenglas L vermittels des Haltekopfs 16 der Transporteinrichtung 18 von der optischen Messeinrichtung 40 zur mechanischen Messeinrichtung 42 transportierbar ist.

Die optische Messeinrichtung 40 und auch die mechanische Messeinrichtung 42 entsprechen funktional weitgehend den in der Druckschrift US 2005/0173046 A1 beschriebenen Messeinrichtungen, so dass sie an dieser Stelle nicht näher beschrieben werden müssen. Bei der optischen Messeinrichtung 40 ist die Kamera (nicht gezeigt), mittels der ein Schattenbild des Brillenglases L (Kontur, Nahteil und Markierungen) erkennbar ist, jedoch ohne Verwendung eines Spiegelkastens im unteren Teil der Messeinrichtung 40 vorgesehen. Die Durchleuchtung des Brillenglases L indes erfolgt von oben mittels einer LED-Lampe 114. Hier kann auch eine Infrarot LED zum Einsatz kommen, was insbesondere bei stark getönten Brillengläsern L den Vorteil einer exakten und kontrastreichen Darstellung des jeweiligen Brillenglases L bietet.

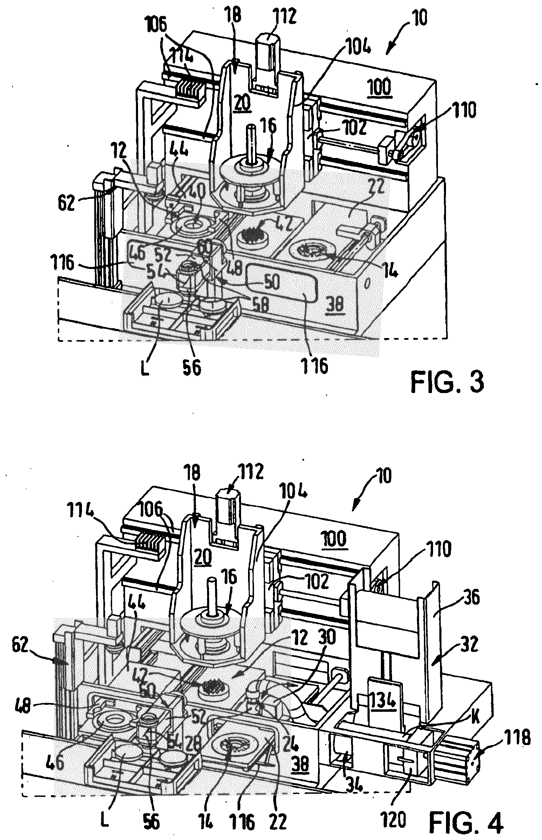

Weiterhin hat die Transporteinrichtung 18 gemäß insbesondere den Fig. 1 bis 4 und 9 einen zweiten Schlitten 44, der eine transparente (Ring)Auflage 46 mit einem (Parallel)Greifer 48 zum zentrierenden Fassen des Brillenglases L trägt, wobei die Auflage 46 mit dem Greifer 48 vermittels des zweiten Schlittens 44 zur Vereinfachung des Ladevorgangs und zum besseren Schutz der Messeinrichtung 40 von der optischen Messeinrichtung 40 schubladenartig horizontal aus einem Gehäuse 38 der Blockvorrichtung 10 hinaus in eine Übergabeposition (Fig. 4), in der ein Brillenglas L mit seiner zu blockenden Werkstückfläche F1 auf die Auflage 46 auflegbar ist, und umgekehrt zur optischen Messeinrichtung 40 zurück bewegbar ist. Anders als der erste Schlitten 22 der Transporteinrichtung 18 ist der zweite Schlitten 44 der Transporteinrichtung 18 mittels eines Pneumatikzylinders gegen justierbare Endanschläge verfahrbar.

Gleichermaßen kann die Blockstation 14 insbesondere zur Vereinfachung des Ladevorgangs vermittels des ersten Schlittens 22 der Transporteinrichtung 18 schubladenartig horizontal aus dem Gehäuse 38 der Blockvorrichtung 10 heraus in eine Übergabeposition verfahren (Fig. 4), in der ein Blockstück S in die Blockstation 14 einsetzbar oder ein auf ein Blockstück S geblocktes Brillenglas L aus der Blockstation 14 herausnehmbar ist. Bei beiden Schlitten 22, 44 schützen automatisch (z.B. federvorgespannt) schließende Klappen 116 (Fig. 1 bis 4 und 10) die Blockvorrichtung 10 und den Bediener.

In einer hierzu alternativen Ausgestaltung (nicht dargestellt) kann anstelle der Klappen, die das schubladenartige Herausfahren der Schlitten aus dem Gehäuse ermöglichen, und der zugeordneten Gehäusewand aber auch eine große hochschwenkbare Schutzhaube aus einem geeigneten transparenten Kunststoff (z.B. Makrolon® der Fa. Bayer) vorgesehen sein, die den gesamten oberen Teil der Blockvorrichtung abdeckt und einen besseren Zugang zum Inneren der Blockvorrichtung ermöglicht. Diese Schutzhaube kann auf ihrer Innenseite zweckmäßig eine Beschichtung besitzen, die UV- und Infrarot-Licht absorbiert, so dass diese Strahlung den Bediener nicht gefährdet, Letzterer gleichwohl auch im Betrieb der Blockvorrichtung freie Sicht auf die wesentlichen Teile bzw. Baugruppen der Blockvorrichtung hat.

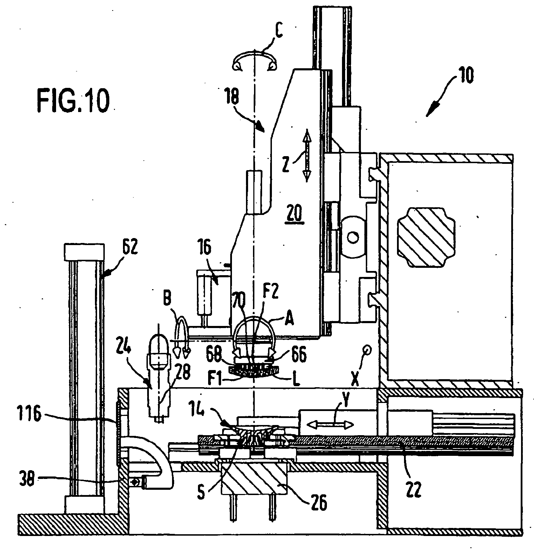

Ferner sind gemäß insbesondere Fig. 10 eine Dosiereinrichtung 24, mittels der das lichtaushärtende Blockmaterial M auf ein sich in der Blockstation 14 befindendes Blockstück S aufbringbar ist, und eine von der Dosiereinrichtung 24 horizontal beabstandete Belichtungseinrichtung 26, mittels der das Blockmaterial M zum Aushärten belichtbar ist, vorgesehen, wobei die Blockstation 14 vermittels des ersten Schlittens 22 der Transporteinrichtung 18 von der Dosiereinrichtung 24, in der das Blockmaterial M auf das Blockstück S zentrisch oder dezentriert aufgebracht werden kann, zur Belichtungseinrichtung 26 und umgekehrt bewegbar ist.

Da die Dosiereinrichtung 24 und die Belichtungseinrichtung 26 örtlich voneinander getrennt sind, besteht nicht die Gefahr, dass Verschmutzungen durch überschüssiges oder nachtropfendes Blockmaterial M die Belichtung mittels UV-Licht beeinträchtigen. Somit werden eine anderenfalls ggf. ungleichmäßige Polymerisation und dadurch hervorgerufene Verspannungen des geblockten Brillenglases vermieden, die wiederum nach dem Abblocken zu erheblichen Ungenauigkeiten der bearbeiteten Fläche führen können.

Nachdem das Brillenglas L vermittels des Haltekopfs 16 der Transporteinrichtung 18 definiert im Raum positioniert auf das sich über der Belichtungseinrichtung 26 in der Blockstation 14 befindende, mit dem Blockmaterial M versehene Blockstück S unter Belassung des Blockmaterial-Aufnahmespalts G aufgedrückt wurde, erfolgt in der Belichtungseinrichtung 26 die Belichtung von unten her durch das transparente Blockstück S hindurch mittels eines UV Leuchtmittels (nicht gezeigt), wobei ggf. mehrere Belichtungsvorgänge stattfinden.

Wie insbesondere in den Fig. 1, 4 und 10 zu erkennen ist, weist die Dosiereinrichtung 24 einen Dosierkopf 28 auf, der in Richtung auf ein sich in der Blockstation 14 befindendes Blockstück S zu und davon weg bewegbar, namentlich verschwenkbar ist, so dass in einer dem Blockstück S nahen Position des Dosierkopfs 28 das Blockmaterial M zuführbar und die Zufuhr des Blockmaterials M unter Wegbewegen des Dosierkopfs 28 aus der dem Blockstück S nahen Position in eine vom Blockstück S entfernte Position beendbar ist. Dabei ist die Dosiereinrichtung 24 über ein Ventil 30, und zwar ein pneumatisch betätigtes Kugelventil, an eine Zufuhreinrichtung 32 für das Blockmaterial M angeschlossen. Durch die Dosiereinrichtung 24 wird eine vorherberechnete Menge an Blockmaterial M auf das Blockstück S aufgebracht, wobei bei der Volumenberechnung die Frontkurve des Brillenglases L und eine etwaige Verkippung des Brillenglases L über den Haltekopf 16 berücksichtigt werden kann.

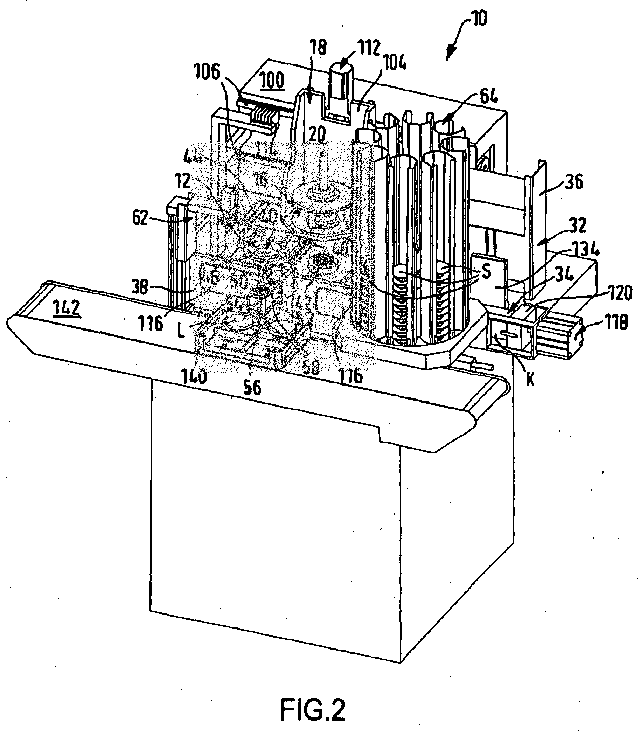

Die Zufuhreinrichtung 32 für das Blockmaterial M weist gemäß den Fig. 2, 4, 16 und 17 einen Aufnahmeraum 34 für eine auswechselbare Blockmaterial-Kartusche K auf, aus der das Blockmaterial M durch Druckluftbeaufschlagung eines Kartuschenkolbens P verdrängbar ist. Die Druckluft liegt mit vorbestimmtem Druck ständig an dem Kolben P der Blockmaterial-Kartusche K an. Somit kann die Menge an Blockmaterial M mittels Druckeinstellung und Öffnungszeiteinstellung (am Ventil 30) dosiert werden. Nach dem Dosieren des Blockmaterials M entfernt sich der Dosierkopf 28 durch Verschwenken schnell vom Blockstück S, wodurch ein Abreißen des Blockmaterials M an der Düse des Dosierkopfs 28 bewirkt wird, ohne dass das Blockmaterial M nachtropft.

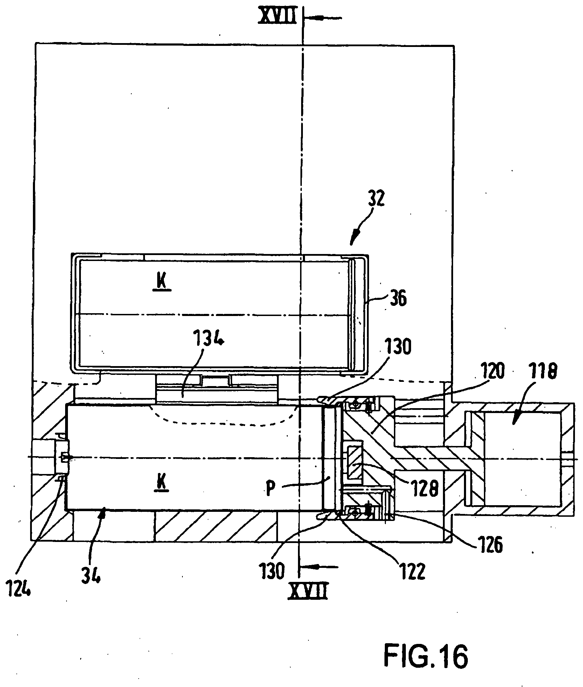

Gemäß den Fig. 1, 2, 4, 9, 16 und 17 weist die Zufuhreinrichtung 32 für das Blockmaterial M ein Magazin 36 zur Aufnahme einer Mehrzahl von Blockmaterial-Kartuschen K auf, aus dem jeweils eine Blockmaterial-Kartusche K zum Ersatz einer leeren Blockmaterial-Kartusche K automatisch in den Aufnahmeraum 34 der Zufuhreinrichtung 32 nachführbar ist. Somit kann eine für eine Tagesproduktion ausreichende Menge an Blockmaterial M bevorratet und exakt dosiert zugeführt werden. Gemäß Fig. 16 besitzt die Zufuhreinrichtung 32 einen Verschlusszylinder 118 für die Kartuschenklemmung mit einem axial verschiebbaren Klemmabschnitt 120, mittels dessen die Blockmaterial-Kartusche K rückseitig abgedichtet (Dichtelement 122 in Fig. 16) mit ihrer Vorderseite (links in Fig. 16) an einen Anschlussstutzen 124 gedrückt werden kann, wobei auch ein vorderseitiger Kartuschenverschluss (etwa eine Folie od.dgl.) bei geeigneter (spitzer oder scharfer) Ausbildung des Anschlussstutzens 124 durchstochen/durchschnitten werden kann. In Fig. 16 mit 126 bezeichnet ist der Druckluftanschluss im Klemmabschnitt 120. Mittels eines Sensors 128 ist die axiale Position des Kolbens P der Blockmaterial-Kartusche K erfassbar und damit erkennbar, wann die Blockmaterial-Kartusche K leer ist. Eine leere Blockmaterial-Kartusche K kann mittels des Verschlusszylinders 118 über an dessen Klemmabschnitt 120 vorgesehene, federvorgespannte Rastelemente 130 von dem Anschlussstutzen 124 weggezogen werden, worauf die leere Blockmaterial-Kartusche K infolge der Schwerkraft nach unten in einen Auffangbehälter (nicht gezeigt) fällt..

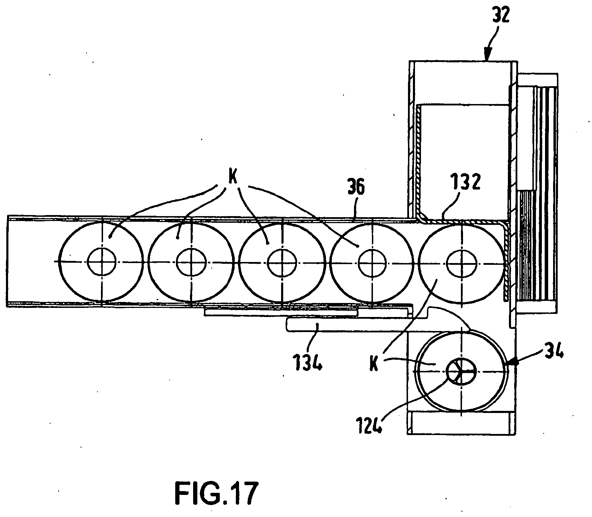

Zur Vereinzelung der Blockmaterial-Kartuschen K aus dem Magazin 36 der Zufuhreinrichtung 32 ist ein axial verschiebbarer, abgewinkelter Wandabschnitt 132 vorgesehen, der mit einer Sperrklinke 134 zusammenwirkt, wobei die Sperrklinke 134 verhindert, dass bei geöffnetem Verschlusszylinder 118 eine volle Blockmaterial-Kartusche K in den Auffangbehälter fällt. Zum Bestücken des Aufnahmeraums 34 mit einer vollen Blockmaterial-Kartusche K wird der Wandabschnitt 132 axial (in Fig. 17 nach unten) unter Anheben der an der nächsten Blockmaterial-Kartusche K anliegenden Sperrklinke 134 verfahren, wobei der Wandabschnitt 132 zum einen die Öffnung des Aufnahmeraums 34 zum Auffangbehälter hin verschließt und zum anderen das Nachrutschen einer weiteren Blockmaterial-Kartusche K aus dem Magazin 36 verhindert. In der Folge kann die in den Aufnahmeraum 34 eingeführte volle Blockmaterial-Kartusche K mittels des Verschlusszylinders 118 gegen den Anschlussstutzen 124 gespannt werden, worauf der Wandabschnitt 132 (in Fig. 17 nach oben) zurückgezogen wird und die nächste Blockmaterial-Kartusche K nachrutscht.

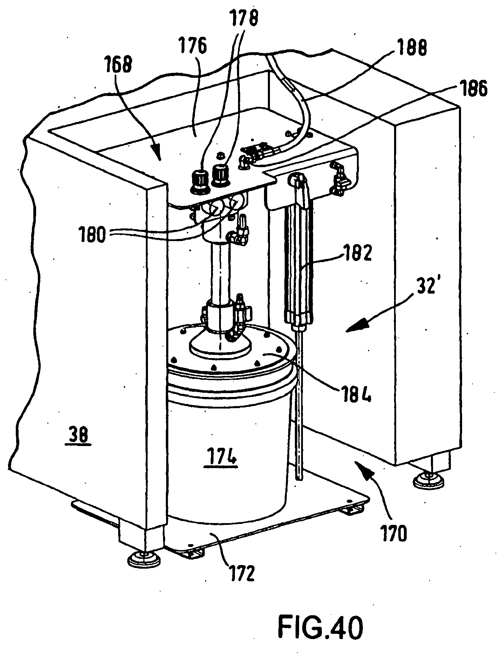

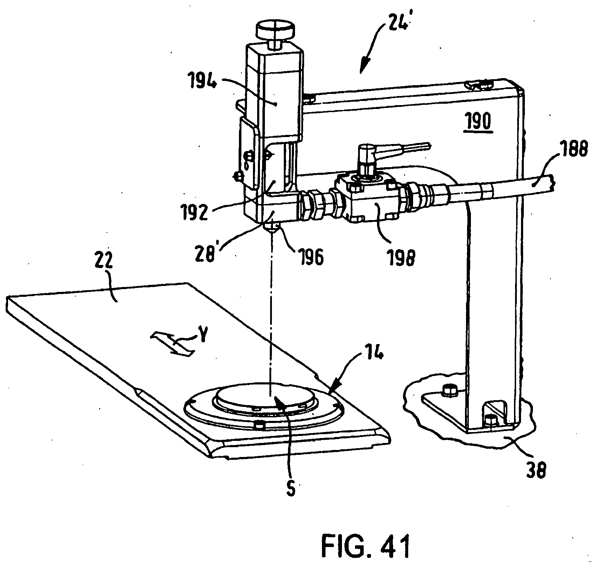

Die Fig. 40 und 41 zeigen eine zu der vorbeschriebenen Ausgestaltung alternative Ausführung der Blockmaterial-Versorgung, genauer der Zufuhreinrichtung 32' (Fig. 40) und der Dosiereinrichtung 24' (Fig. 41), ohne Blockmaterial-Kartuschen, zugeordnetem Aufnahmeraum und Kartuschenmagazin und mit einem bezüglich des Gehäuses 38 feststehenden, d.h. nicht verschwenkbaren Dosierkopf 28'.

Gemäß Fig. 40 weist die alternative Zufuhreinrichtung 32', die einen Betrieb der Blockvorrichtung 10 über mehrere Tage ohne Gebindewechsel gewährleisten soll, eine im Hinblick auf die Gebindegröße angepasste, ansonsten aber handelsübliche Hochdruck-Fasspumpeneinheit 168 auf, wie sie etwa unter der Handelsbezeichnung "AX 5" von der Dosier- und Prüftechnik GmbH, Nördlingen, Deutschland erhältlich ist. Die Fasspumpeneinheit 168 ist in einem Aufnahmeraum 170 des Gehäuses 38 im unteren Teil der Blockvorrichtung 10 angeordnet und umfasst im Wesentlichen eine bodennahe, ortsfeste Grundplatte 172, auf der ein auswechselbarer Aufnahmebehälter 174 für das Blockmaterial M, wie ein Eimer oder eine große Dose plazierbar ist, und eine mit dem eigentlichen Pumpenmechanismus fest verbundene, gegenüber dem Gehäuse 38 bewegliche Deckplatte 176, an der sich auch Druckregler 178 und Manometer 180 der Fasspumpeneinheit 168 befinden. Zwischen der Grundplatte 172 und der Deckplatte 176 sind auf bezüglich der Längsachse der Fasspumpeneinheit 168 diametral gegenüberliegenden Seiten zwei Pneumatikzylinder 182 betätigungswirksam angeordnet (in Fig. 40 ist hiervon nur einer zu erkennen, der andere wird von dem Gehäuse 38 verdeckt), die dazu dienen, die Deckplatte 176 in Richtung der Grundplatte 172 zu ziehen, wobei am Pumpenkopf der Fasspumpeneinheit 168 eine Folgeplatte 184, die mittels eines flexiblen Wischrings (nicht gezeigt) gegenüber der Innenwand des Aufnahmebehälters 174 abgedichtet ist, für eine Entnahme des Blockmaterials M aus dem Aufnahmebehälter 174 kolbenartig in den Aufnahmebehälter 174 eintaucht. Die eigentliche Entnahme des Blockmaterials M erfolgt z.B. mittels einer pneumatisch gesteuerten Schöpfkolbenpumpe der Fasspumpeneinheit 168. Der Pumpenausgang 186 ist über einen vorzugsweise beheizten, flexiblen Schlauch 188 an die Dosiereinrichtung 24' angeschlossen (siehe auch Fig. 41).

Wie in Fig. 41 zu erkennen ist, ist der Dosierkopf 28' der alternativen Dosiereinrichtung 24' an einem Befestigungswinkel 190 montiert, der seinerseits am Gehäuse 38 angebracht ist, so dass sich der Dosierkopf 28' ortsfest bezüglich des Gehäuses 38 in definierter Höhe über der Blockstation 14 befindet. Im Dosierkopf 28' ist ein Nadelsitzventil 192 angeordnet, welches mittels eines Pneumatikzylinders 194 betätigbar ist, um den Zufluss von Blockmaterial M zu gestatten bzw. zu unterbrechen; hierfür kann eine handelsübliche Ventil-Zylinder-Einheit zum Einsatz kommen, wie sie z.B. unter der Handelsbezeichnung "Auslassventil 401.02.01" von der Hilger u. Kern GmbH, Mannheim, Deutschland erhältlich ist. Die Düsenöffnung am Ventilkopf 196 ist relativ klein, so dass das Blockmaterial M in einem verhältnismäßig dünnen Strang (in Fig. 41 mit strichpunktierter Linie angedeutet) auf die Mitte des Blockstücks S in der Blockstation 14 läuft und dort ein Häufchen bildet. Bei Unterbrechung der Zufuhr durch das Nadelsitzventil 192 entsteht lediglich ein sehr dünner, haarartiger Ansatz am Blockmaterial-Häufchen; bei geeignet eingestellter Viskosität des Blockmaterials M kommt es weder zu einem Nachtropfen noch einem Abreißen desselben, so dass die zuvor erwähnte Schwenkbewegung des Dosierkopfs entbehrlich ist.

Da die Fasspumpeneinheit 168 schließlich nur bedingt in der Lage ist, das Blockmaterial M in exakt dosierter Menge zu fördern, ist gemäß Fig. 41 unmittelbar vor dem Nadelsitzventil 192 des Dosierkopfs 28' - hydraulisch zwischen dem Nadelsitzventil 192 und dem von der Fasspumpeneinheit 168 kommenden Schlauch 188 - noch ein speziell für hochviskose Flüssigkeiten entwickelter Durchflussmesser 198 installiert, wie er z.B. unter der Handelsbezeichnung "Flowmeter OG1-SS4-VHE-B-SAT" von der Titan Enterprises Ltd., Sherborne, Dorset, Großbritannien verfügbar ist. Der hiermit gemessene Volumenstrom wird in der Steuerung der Blockvorrichtung 10 verarbeitet und im Ergebnis dazu benutzt, dass Nadelsitzventil 192 so anzusteuern, dass nur die für das jeweils zu blockende Brillenglas L erforderliche Menge an Blockmaterial M zugeführt wird.

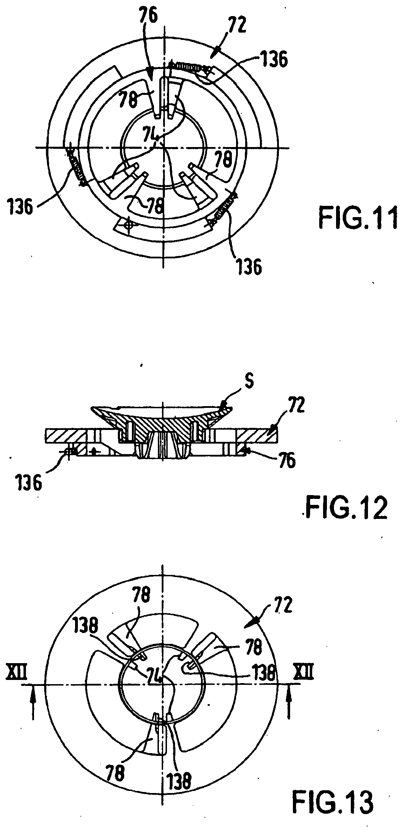

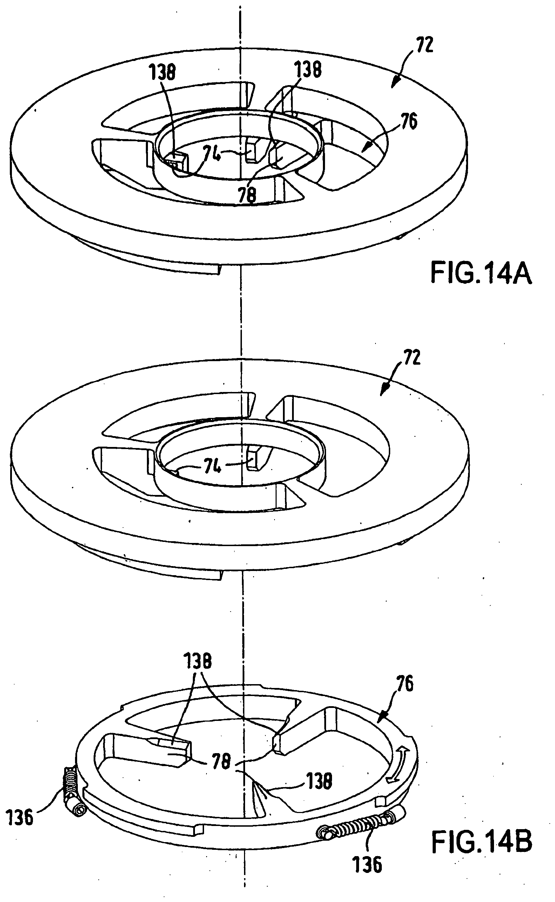

Weitere Details der Blockstation 14 sind den Fig. 11 bis 14B zu entnehmen. Demgemäß besitzt die Blockstation 14 einen drehfest auf dem ersten Schlitten 22 befestigten ersten Spannring 72 mit radial nach innen vorstehenden Spannbacken 74 zum Angriff an zugeordnete Spannvorsprünge V am zu haltenden Blockstück S (siehe Fig. 19 und 20) und einen unterhalb des ersten Spannrings 72 angeordneten, bezüglich des ersten Spannrings 72 gegen Federvorspannung (Zugfedern 136) verdrehbaren und am ersten Spannring 72 anliegenden zweiten Spannring 76, der radial verlaufende Spannvorsprünge 78 aufweist, über die die im aufgenommenen Zustand des Blockstücks S an den Spannbacken 74 des ersten Spannrings 72 anliegenden Spannvorsprünge V des Blockstücks S klemmbar sind. An den Spannvorsprüngen 78 des zweiten Spannrings 76 (und als Einführhilfe ggf. auch an den Spannbacken 74 des ersten Spannrings 72) sind Schrägflächen 138 ausgebildet, über die beim Eindrücken eines Blockstücks S in die Blockstation 14 eine Drehung des zweiten Spannrings 76 relativ zum ersten Spannring 72 bewirkt wird.

Die Fig. 38 und 39 zeigen eine gegenüber der Vorbeschreibung alternative, insbesondere im Hinblick auf einen möglichst großen Lichtdurchfall von der Belichtungseinrichtung 26 auf das Blockstück S' (vgl. Fig. 10), d.h. eine möglichst geringe Abschattung optimierte Ausgestaltung der Spanneinrichtung der Blockstation 14. Demgemäß besitzt die Spanneinrichtung für das Blockstück S' lediglich einen am ersten Schlitten 22 ortsfest angebrachten Spannring 72', mit einer zentralen Aussparung 200, in die ein vorzugsweise transparenter Auflagering 202 aus z.B. Glas eingesetzt ist. Anstelle des drehbeweglichen zweiten Spannrings sind drei Blattfederelemente 204 vorgesehen, und zwar ist jedem Spannbacken 74' des Spannrings 72' ein am Spannring 72' auf geeignete Weise befestigtes Blattfederelement 204 so zugeordnet, dass sie einen geringfügig "auffederbaren" Spalt 206 für den jeweiligen Spannvorsprung V des Blockstücks S' (vgl. die Fig. 19 und 20) begrenzen. Im Ergebnis sorgen die Blattfederelemente 204 dafür, dass die Spannvorsprünge V des in die Spanneinrichtung eingesetzten Blockstücks S' spielfrei an den Spannbacken 74' des Spannrings 72' anliegen.

Das in Fig. 39 dargestellte, geringfügig modifizierte Blockstück S' unterscheidet sich von dem insbesondere in den Fig. 10, 12, 19 und 20 gezeigten Blockstück S im Übrigen nur dahingehend, dass es am Außenrand einen Ringsteg E aufweist, über den sich das in die Spanneinrichtung der Blockstation 14 eingesetzte Blockstück S' - neben seiner "zentralen" Abstützung mit der ringförmigen Referenzfläche R am Spannring 72' - auch radial außen am Spannring 72', genauer dem am Spannring 72' gehaltenen Auflagering 202 abstützen kann. Mit dieser zusätzlichen Abstützung des Blockstücks S' wird zuverlässig vermieden, dass sich das Blockstück S' in unerwünschter Weise verformt, wenn das Brillenglas L während des Blockvorgangs in das auf das Blockstück S' aufgebrachte, noch flüssige Blockmaterial M gedrückt wird.

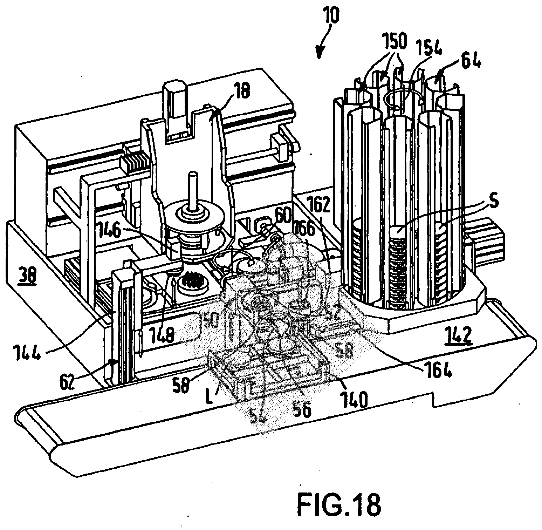

Zur weiteren Automatisierung der Blockvorrichtung 10 ist gemäß den Fig. 1 bis 4, 9 und 18 eine Ladeeinheit 50 vor dem Gehäuse 38 der Blockvorrichtung 10 vorgesehen, mittels der sowohl die Brillengläser L als auch die Blockstücke S der Blockvorrichtung 10 zuführbar und zudem die auf die Blockstücke S geblockten Brillengläser L aus der Blockvorrichtung 10 entnehmbar sind. Wie insbesondere in Fig. 18 zu erkennen ist, weist die Ladeeinheit 50 einen Ladearm 52 mit einer Längsachse 54 auf, an dem ein Ladekopf 56 mit wenigstens einem, im dargestellten Ausführungsbeispiel zwei bezüglich der Längsachse 54 diametral gegenüberliegenden Saugern 58 um die Längsachse 54 des Ladearms 52 um 180° verdrehbar montiert ist, wobei der Ladearm 52 selbst um eine zur Längsachse 54 des Ladearms 52 senkrecht verlaufende Schwenkachse 60 schwenkbar und entlang der Schwenkachse 60 linear, d.h. in Fig. 18 nach oben und unten verstellbar ist. Darüber hinaus können die Sauger 58 um eine durch beide Sauger 58 verlaufende Achse gedreht werden, was insbesondere ein lagerichtiges Einlegen des Blockstücks S in die Blockstation 14 und in einen Arbeitskasten 140 erlaubt, der auf einem vor der Blockvorrichtung 10 angeordneten Förderband 142 plaziert ist. Die Drehung um letztere Achse wird mittels Schrittmotor und Zahnradgetriebe (beides nicht gezeigt) bewerkstelligt. Der Schwenk des Ladearms 52 um die Schwenkachse 60 erfolgt ebenfalls mittels Schrittmotor und Zahnradgetriebe (beides nicht dargestellt). Die Hubbewegung des Ladearms 52 (hoch/runter) erfolgt hingegen pneumatisch mittels eines druckgeregelten Zylinders (nicht gezeigt).

Weiterhin ist zwischen dem Gehäuse 38 der Blockvorrichtung 10 und dem Förderband 142 gemäß den Fig. 1 bis 4, 9 und 18 eine Vertikaleinheit 62 zur Übernahme eines zu blockenden Brillenglases L von der Ladeeinheit 50 und Übergabe des zu blockenden Brillenglases L an die sich in der Übergabeposition (Fig. 4) befindende Auflage 46 mit dem Greifer 48 auf dem zweiten Schlitten 44 der Transporteinrichtung 18 vorgesehen. Die Vertikaleinheit 62 umfasst gemäß Fig. 18 zwei nebeneinander angeordnete Hubzylinder 144, 146, von denen der eine (im dargestellten Ausführungsbeispiel kolbenlose) Hubzylinder 144 mit dem anderen Hubzylinder 146 einen im Verhältnis großen Hub auszuführen vermag, während der andere Hubzylinder 146 zur Ausführung eines demgegenüber kleineren Hubs ausgelegt ist und einen Sauger 148 zum Halten des Brillenglases L trägt. Mittels des Saugers 148 kann ein durch die Ladeeinheit 50 gewendetes Brillenglas L von der Ladeeinheit 50 entgegengenommen und sodann nach Verfahren der Hubzylinder 144, 146 nach unten auf der Auflage 46 abgelegt werden. Hierbei fährt zunächst der Hubzylinder 144 bis Endanschlag nach unten, wonach der kleinere Hubzylinder 146 das Brillenglas L mit geringem Druck langsam auf die Auflage 46 absenkt.

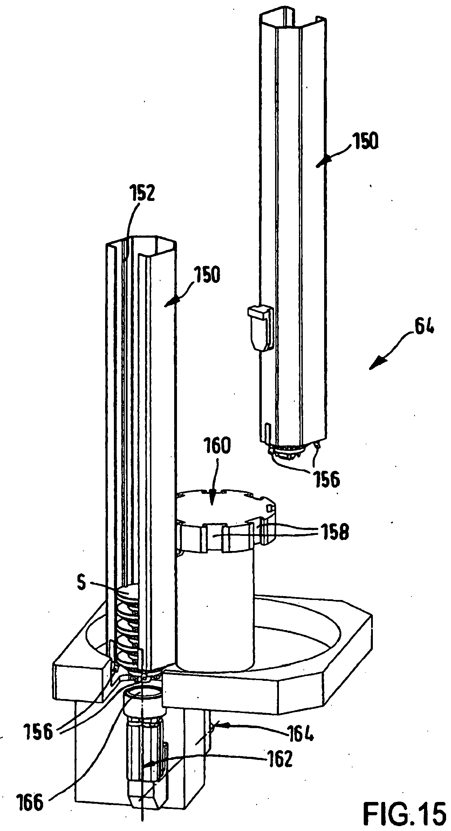

Gemäß den Fig. 1, 2, 9 und 18, insbesondere aber Fig. 15 weist die Blockvorrichtung 10 ein Blockstückmagazin 64 zur Aufnahme einer Mehrzahl von ggf. auch verschiedenen Blockstücken S auf, aus dem ein vorbestimmtes Blockstück S automatisch vereinzelbar und an die Ladeeinheit 50 übergebbar ist, worauf das Blockstück S vermittels der Ladeeinheit 50 in die sich in der Übergabeposition (Fig. 4) befindende Blockstation 14 auf dem ersten Schlitten 22 der Transporteinrichtung 18 einsetzbar ist. Das Blockstückmagazin 64 besitzt im dargestellten Ausführungsbeispiel acht Magazinstangen 150, die eine jeweils unterschiedlich angeordnete Kodierungsleiste 152 (Fig. 15) zur Aufnahme verschiedener Blockstücke S (mit unterschiedlichen Blockflächenradien) aufweisen können. Die Magazinstangen 150 sind im Blockstückmagazin 64 um eine Magazinachse 154 dreh- und indexierbar (Pfeil in Fig. 18). An ihrem unteren Ende sind die Magazinstangen 150 mit Klemmfedern 156 (Fig. 15) versehen, die ein Herausrutschen der Blockstücke S aus der jeweiligen Magazinstange 150 verhindern. Die Magazinstangen 150 können vorab bestückt und sodann in einer zugeordneten T-Nut 158 in einem Magazinstangenträger 160 eingehängt werden. Die Entnahme jeweils eines Blockstücks S erfolgt von unten mittels eines Vertikal-Pneumatikzylinders 162, der seinerseits auf einem Horizontal-Pneumatikzylinder 164 sitzt und einen Sauger 166 für des Blockstück S aufweist, wobei mittels des Horizontal-Pneumatikzylinders 164 das am Sauger 166 gehaltene Blockstück S in eine Übergabeposition (Fig. 18) bewegt werden kann, in der die Ladeeinheit 50 das Blockstück S für den Transport in die Blockstation 14 entgegennehmen kann. Somit kann auch die Zuführung von Blockstücken S vollautomatisch erfolgen, wobei eine ausreichende Menge an Blockstücken S mittels des Blockstückmagazins 64 bevorratet werden kann.

Im Ergebnis wird eine Blockvorrichtung 10 geschaffen, bei der eine automatische Zuführung von Brillenglas-Rohlingen L aus Arbeitskästen 140, deren automatische Ausrichtung in der Blockvorrichtung 10 selbst und auch die Zuführung von Blockmaterial M und Blockstücken S vollautomatisch erfolgen kann. Mittels der Transporteinrichtung 18 kann das Brillenglas L vor dem eigentlichen Blocken, z.B. für ein prismatisches Blocken im Raum orientiert werden. Bei etwa einem dezentrierten Blocken verfährt z.B. der erste Schlitten 22 mit dem in der Blockstation 14 gehaltenen Blockstück S um den Betrag der Dezentration. Die Kreuztischanordnung 20 senkt den Haltekopf 16 mit dem Brillenglas L auf das Blockstück S ab, wobei das Blockmaterial M von innen nach außen verdrängt wird, bis der vorher berechnete Abstand zwischen Brillenglas L und Blockstück S erreicht ist. Es erfolgt die UV-Belichtung des Blockmaterials M von unten her, ggf. mit mehreren Lichtimpulsen, um den Verbund zwischen Brillenglas L und Blockstück S herzustellen, wie er in Fig. 20 gezeigt ist.

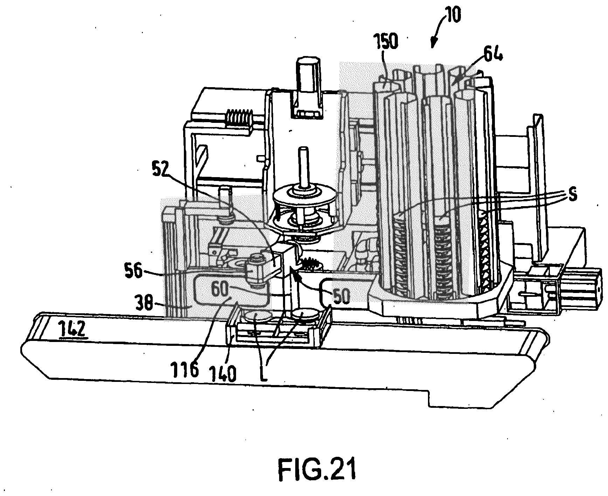

Nachfolgend soll unter Bezugnahme auf die Fig. 21 bis 37 ein möglicher, vollautomatischer Blockvorgang mit der Blockvorrichtung 10 gemäß den Fig. 1 bis 18 in seinem zeitlichen Ablauf stichpunktartig beschrieben werden, wobei in den Figuren nur diejenigen Bezugszeichen verwendet wurden, die hierbei angesprochene Bauteile bzw. Baugruppen kennzeichnen.

Fig. 21: Auf dem Förderband 142 vor der Blockvorrichtung 10 steht ein Arbeitskasten 140, in dem sich zwei zu blockende Brillengläser L befinden. Der Ladearm 52 der Ladeeinheit 50 schwenkt um die Schwenkachse 60 bis sich der Ladekopf 56 über dem als Erstes zu blockenden Brillenglas L befindet. Das Blockstückmagazin 64 dreht die Magazinstange 150 mit den für diesen Blockvorgang herzunehmenden Blockstücken S in die Entnahmeposition (nicht sichtbar).

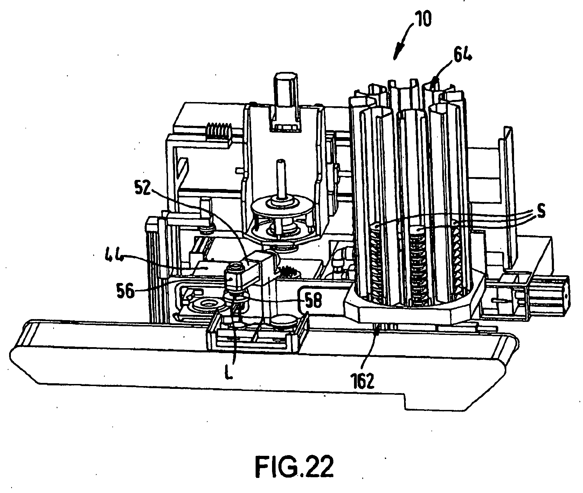

Fig. 22: Der Ladearm 52 fährt nach unten, um das Brillenglas L mittels des Saugers 58 am Ladekopf 56 anzusaugen, und fährt sodann mit dem angesaugten Brillenglas L wieder nach oben. Der zweite Schlitten 44 fährt nach vorne in Beladeposition, wobei sich die linke Klappe 116 (siehe Fig. 21) im Gehäuse 38 öffnet. Der Vertikal-Pneumatikzylinder 162 (vgl. Fig. 15) zieht ein am Sauger 166 angesaugtes Blockstück S nach unten aus dem Blockstückmagazin 64 heraus (nicht sichtbar).

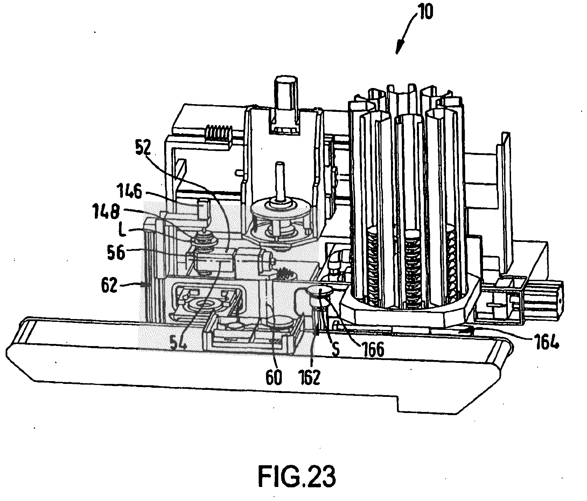

Fig. 23: Der Ladekopf 56 schwenkt um 180° um die Längsachse 54 des Ladearms 52, so dass sich das angesaugte Brillenglas L oben befindet. Der Ladearm 52 schwenkt um die Schwenkachse 60 in Übergabeposition unter den Hubzylinder 146 der Vertikaleinheit 62. Der Hubzylinder 146 fährt nach unten und das Brillenglas L wird mittels des Saugers 148 angesaugt. Das am Sauger 166 gehaltene Blockstück S wird mittels des Horizontal-Pneumatikzylinders 164 und des Vertikal-Pneumatikzylinders 162 in Übergabeposition auf den Schwenkkreis des Ladearms 52 gefahren.

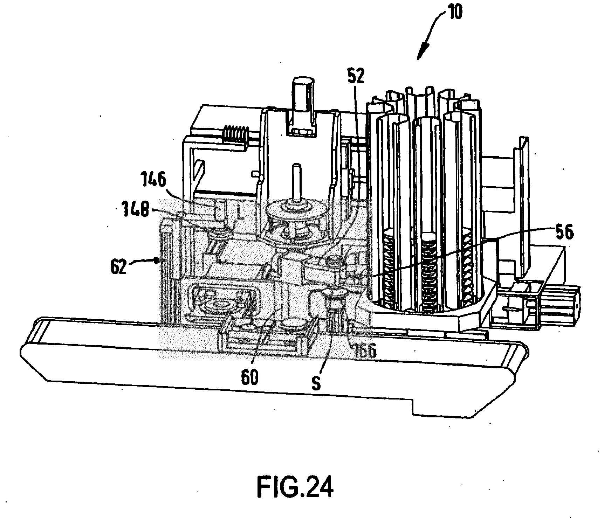

Fig. 24: Der Hubzylinder 146 der Vertikaleinheit 62 zieht das am Sauger 148 gehaltene Brillenglas L nach oben. Der Ladearm 52 schwenkt um die Schwenkachse 60 in Blockstück-Übergabeposition, in der sich der Ladekopf 56 über dem am Sauger 166 gehaltenen Blockstück S befindet.

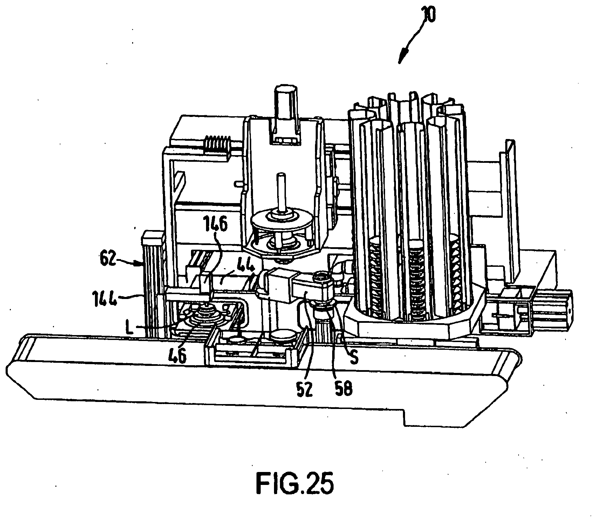

Fig. 25: Der große Hubzylinder 144 der Vertikaleinheit 62 fährt nach unten, worauf der kleine Hubzylinder 146 der Vertikaleinheit 62 mit geringerem Druck nach unten fährt, um das Brillenglas L auf der Auflage 46 auf dem zweiten Schlitten 44 abzulegen. Der Ladearm 52 fährt nach unten und das Blockstück S wird mittels des Saugers 58 angesaugt.

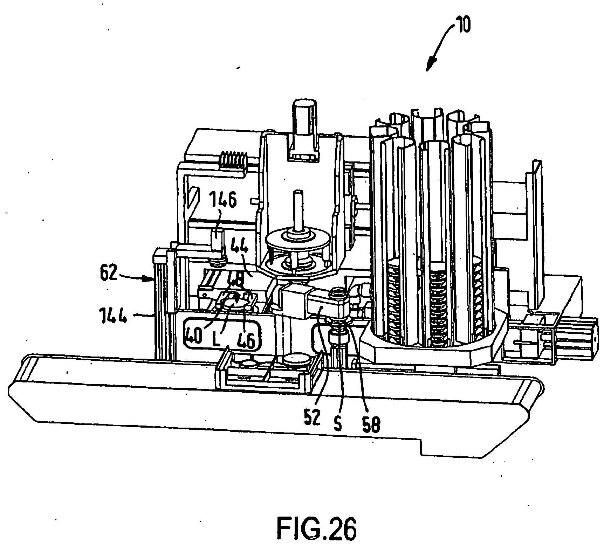

Fig. 26: Die Hubzylinder 144, 146 der Vertikaleinheit 62 fahren nach oben. Das Brillenglas L wird mittels der (Parallel)Greifer 48 auf der Auflage 46 zentriert, worauf der zweite Schlitten 44 nach hinten in Messposition über die optische Messeinrichtung 40 der Messstation 12 fährt, wo das Brillenglas L optisch vermessen wird. Der Ladearm 52 mit dem am Sauger 58 gehaltenen Blockstück S fährt nach oben.

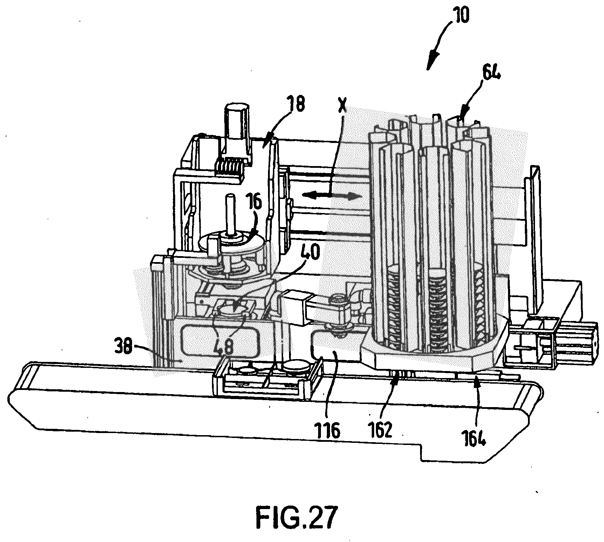

Fig. 27: Der Haltekopf 16 der Transporteinrichtung 18 wird entlang der Linearachse X über die optische Messeinrichtung 40 gefahren und die Greifer 48 werden geöffnet (nicht gezeigt). Der Sauger 166 (nicht dargestellt; vgl. Fig. 15) wird mittels des Vertikal-Pneumatikzylinders 162 und des Horizontal-Pneumatikzylinders 164 in Blockentnahmeposition unterhalb des Blockstückmagazins 64 gefahren.

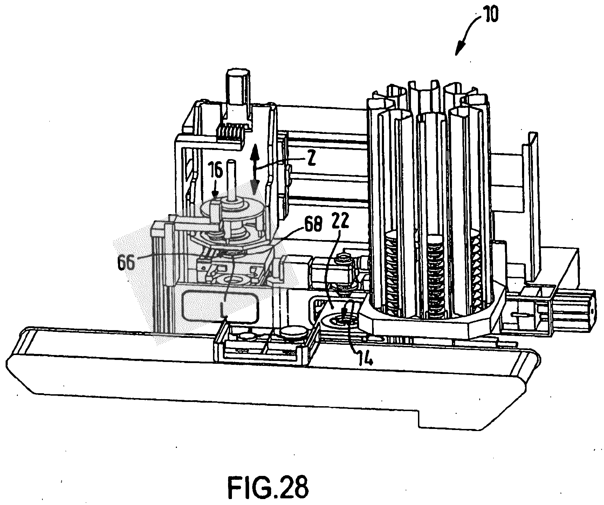

Fig. 28: Der Haltekopf 16 wird entlang der Linearachse Z nach unten gefahren, wobei die Linsen-Spanneinheit 66 mit dem Stiftrelief 70 auf der Kontaktfläche F2 des Brillenglases L aufsetzt (nicht gezeigt; vgl. Fig. 10). Ist Vakuum an der Saugerlippe 68 der Linsen-Spanneinheit 66 vorhanden, wird das Stiftrelief 70 geklemmt (vgl. die Fig. 7 und 8 mit zugehöriger Beschreibung). Der Haltekopf 16 fährt sodann mit dem angesaugten Brillenglas L entlang der Linearachse Z nach oben. Der erste Schlitten 22 fährt mit der Blockstation 14 in Übergabeposition nach vorne (Linearachse Y), wobei sich die rechte Klappe 116 (siehe Fig. 27) im Gehäuse 38 öffnet.

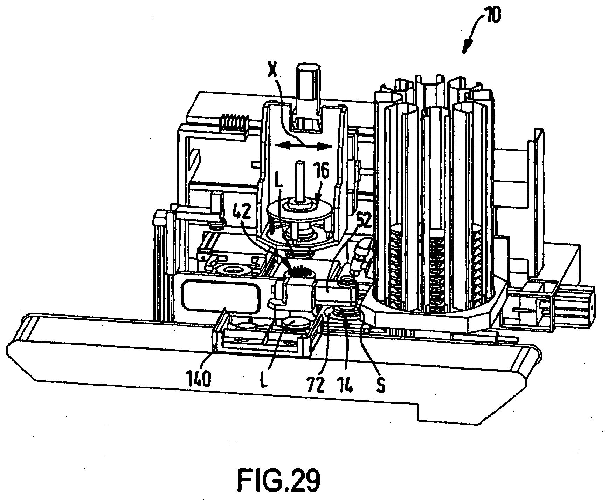

Fig. 29: Der Haltekopf 16 wird entlang der Linearachse X mit dem angesaugten Brillenglas L über die mechanische Messeinrichtung 42 der Messstation 12 gefahren. Der Ladearm 52 mit dem angesaugten Blockstück S fährt nach unten, um das Blockstück S am Spannring 72 der Blockstation 14 zu klemmen, worauf der Ladearm 52 ohne Blockstück S wieder hoch fährt. Nun ist der Ladearm 52 frei für das weitere Brillenglas L im Arbeitskasten 140, mit welchem wie vorbeschrieben verfahren werden kann (was daher in den folgenden Figuren nicht weiter gezeigt ist).

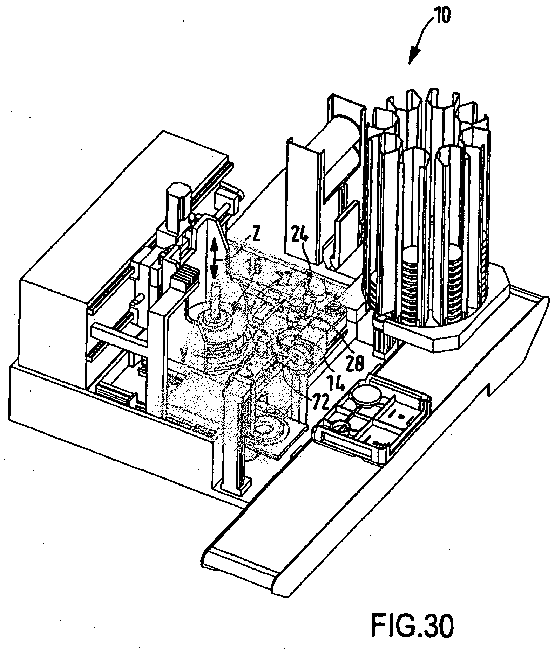

Fig. 30: Der Haltekopf 16 wird entlang der Linearachse Z nach unten gefahren, um das angesaugte Brillenglas L mit der mechanischen Messeinrichtung 42 der Messstation 12 in Kontakt zu bringen (nicht zu sehen). Die Geometrie der zu blockenden Werkstückfläche F1 am Brillenglas L wird nun mittels der mechanischen Messeinrichtung 42 erfasst. Der erste Schlitten 22 fährt die Blockstation 14 in eine mittlere Stellung, nämlich die Dosierposition (Linearachse Y), in der sich das am Spannring 72 geklemmte Blockstück S unterhalb des Dosierkopfs 28 der Dosiereinrichtung 24 befindet.

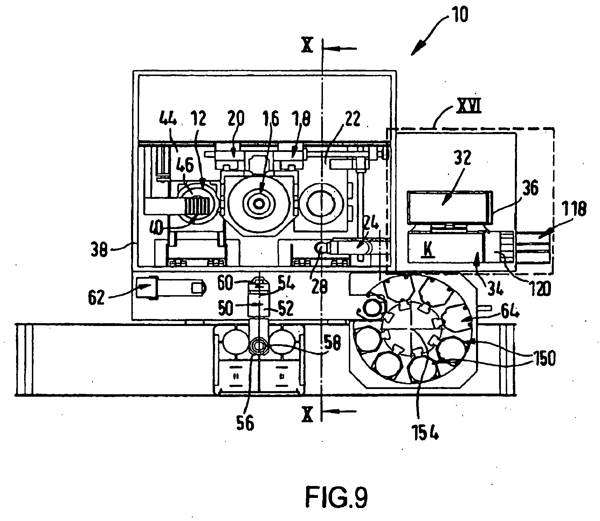

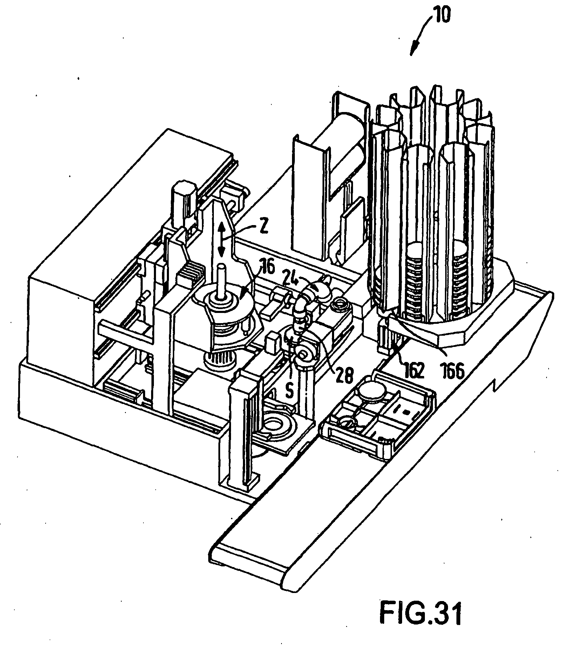

Fig. 31: Der Haltekopf 16 wird entlang der Linearachse Z mit dem angesaugten Brillenglas L nach oben gefahren. Der Dosierkopf 28 der Dosiereinrichtung 24 wird über das Blockstück S geschwenkt (vgl. die strichpunktierte Schwenkachse in Fig. 9). Der Sauger 166 wird mittels des Vertikal-Pneumatikzylinders 162 nach oben gefahren, so dass das nächste Blockstück S angesaugt werden kann.

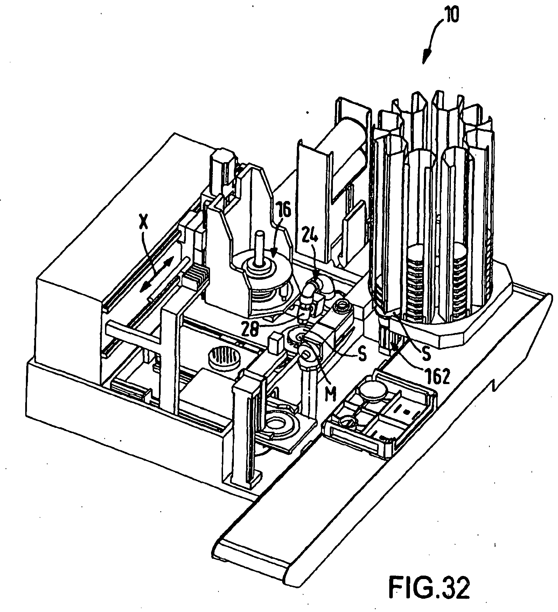

Fig. 32: Der Haltekopf 16 wird entlang der Linearachse X mit dem angesaugten Brillenglas L über die berechnete (X-)Blockposition gefahren. Das Blockmaterial M wird mittels des Dosierkopfs 28 der Dosiereinrichtung 24 in vorbestimmter Menge auf das Blockstück S aufgebracht, worauf der Dosierkopf 28 zurück geschwenkt wird. Das durch den Sauger 166 angesaugte nächste Blockstück S wird mittels des Vertikal-Pneumatikzylinders 162 nach unten gefahren.

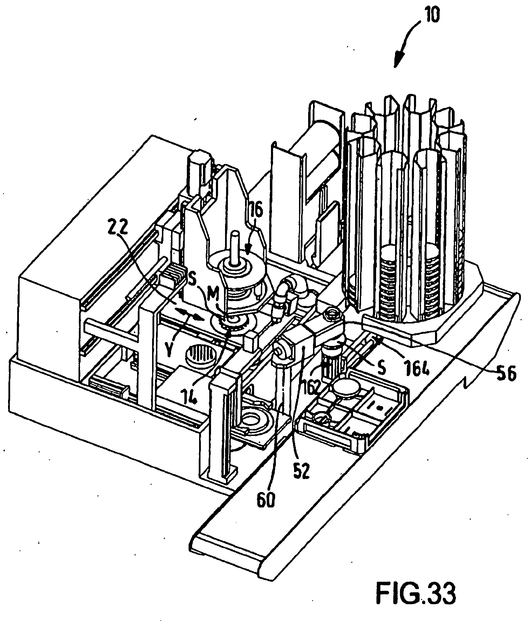

Fig. 33: Der erste Schlitten 22 mit der Blockstation 14 fährt entlang der Linearachse Y nach hinten in die berechnete (Y-) Blockposition, um das Blockstück S unterhalb des am Haltekopf 16 gehaltenen Brillenglases L zu positionieren. Das mittels des Saugers 166 angesaugte nächste Blockstück S wird über die Pneumatikzylinder 162, 164 in Übergabeposition gefahren. Der Ladearm 52 schwenkt den Ladekopf 56 um die Schwenkachse 60 auf Übergabeposition für das nächste Blockstück S.

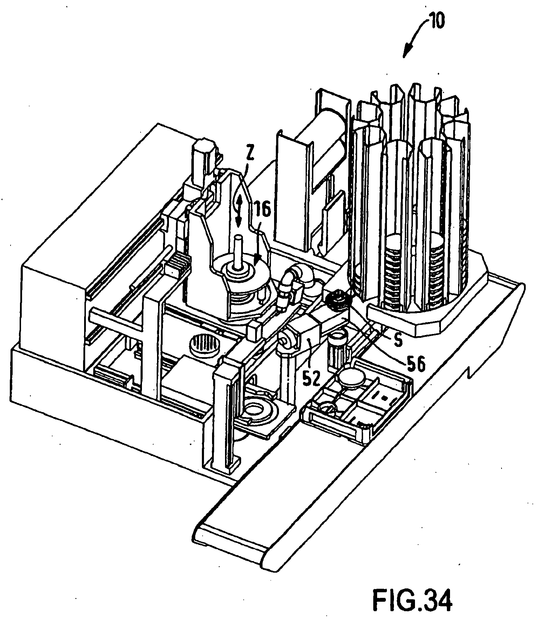

Fig. 34: Der Haltekopf 16 mit dem angesaugten Brillenglas L, welches ggf. durch Verkippen um die Kippachsen A, B und Drehen um die Drehachse C wie berechnet winkelmäßig im Raum positioniert wurde oder jetzt wird (vgl. insbesondere die Fig. 5 und 6 mit zugehöriger Beschreibung), wird entlang der Linearachse Z in die berechnete (Z-)Blockposition gefahren, wobei das Brillenglas L mit seiner zu blockenden Werkstückfläche F1 unter Belassung des Blockmaterial-Aufnahmespalts G in das auf dem Blockstück S aufgebrachte Blockmaterial M gedrückt wird (siehe hierzu auch Fig. 20). Die Belichtungseinrichtung 26 (vgl. Fig. 10) wird aktiviert und das Blockmaterial M wird mittels UV-Licht ausgehärtet. Der Ladearm 52 fährt nach unten, um das nächste Blockstück S zu übernehmen, und fährt sodann wieder nach oben, worauf der Ladekopf 56 um 180° geschwenkt wird, so dass sich das angesaugte nächste Blockstück S oben befindet.

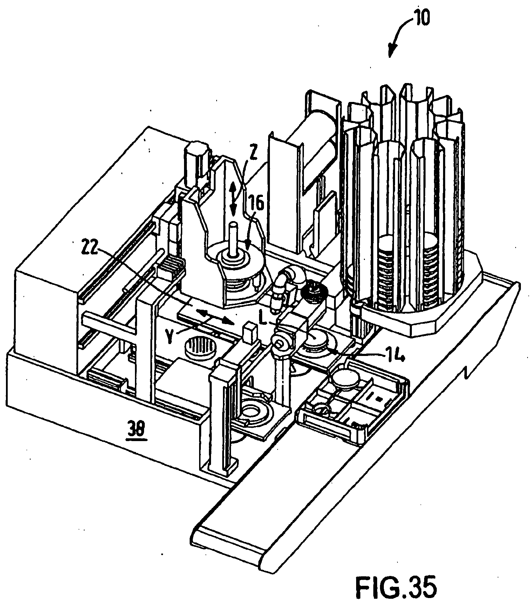

Fig. 35: Das Vakuum im Haltekopf 16 wird ausgeschaltet, um das angesaugte Brillenglas L loszulassen. Der Haltekopf 16 wird entlang der Linearachse Z nach oben gefahren. Der erste Schlitten 22 fährt die Blockstation 14 nach vorne in die Übergabeposition aus dem Gehäuse 38 heraus (Linearachse Y).

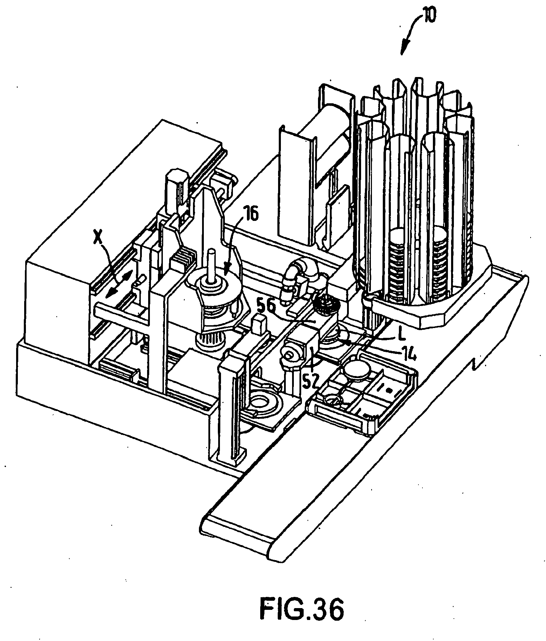

Fig. 36: Der Haltekopf 16 wird entlang der Linearachse X über die optische Messeinrichtung 40 der Messstation 12 gefahren. Der Ladearm 52 fährt nach unten, um das auf dem Blockstück S geblockte Brillenglas L aus der Blockstation 14 zu entnehmen, und fährt sodann wieder nach oben, worauf der Ladekopf 56 um 180° geschwenkt wird, so dass sich das geblockte Brillenglas L oben befindet. Der Ladearm 52 fährt dann wieder nach unten, um das am Ladekopf 56 angesaugte nächste Blockstück S in der Blockstation 14 abzulegen, worauf der Ladearm 52 wieder nach oben fährt.

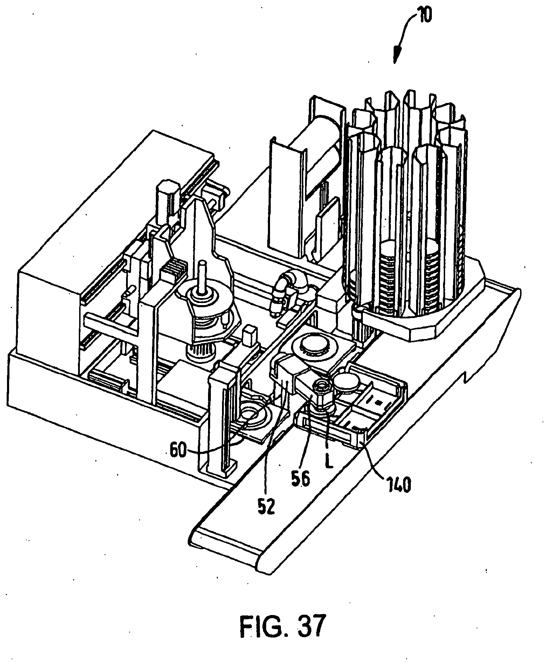

Fig. 37: Der Ladekopf 56 wird um 180° geschwenkt, so dass sich das auf dem Blockstück S geblockte Brillenglas L unten befindet, worauf der Ladearm 52 um die Schwenkachse 60 über den Arbeitskasten 140 geschwenkt wird. Der Ladearm 52 fährt sodann nach unten und das Vakuum wird ausgeschaltet, um das geblockte Brillenglas L im Arbeitskasten 140 abzulegen.

Wenngleich oben ein lichtaushärtendes Blockmaterial explizit angesprochen wurde, ist es für den Fachmann ersichtlich, dass grundsätzlich auch andere Blockmaterialien zum Einsatz kommen können. So könnte z.B. ein thermoplastisches Blockmaterial wie Polycaprolacton od. dgl. (vgl. US 5,763,075) verwendet werden, so dass die Belichtungseinrichtung (bei 26 in Fig. 10) entbehrlich wäre. Es wäre in diesem Fall allerdings dafür Sorge zu tragen, dass die Blockmaterialzuführung für ein thermoplastisches Medium ausgelegt ist, was eine geeignete Beheizung der Dosier- und Zufuhreinrichtungen für das Blockmaterial und ggf. eine Kühlung der Blockstation beinhaltet.

Es wird eine Vorrichtung zum Blocken von Werkstücken, insbesondere Brillengläsern, für deren Bearbeitung und/oder Beschichtung offenbart, umfassend eine Auflage zum Auflegen des zu blockenden Werkstücks, eine Blockstation, in der das Werkstück mittels eines temporär verformbaren Blockmaterials auf einem Blockstück aufblockbar ist, und eine einen Haltekopf für das Werkstück aufweisenden Transporteinrichtung, mittels der eine Relativbewegung zwischen dem am Haltekopf gehaltenen Werkstück einerseits und der Auflage sowie der Blockstation andererseits erzeugbar ist. Um einen möglichst universellen Einsatz der Blockvorrichtung zu ermöglichen, weist die Transporteinrichtung sechs lagegeregelte Bewegungsachsen (X, Y, Z, A, B, C) auf, mittels der das Werkstück unter Berücksichtigung von Orientierung und Geometrieinformationen relativ zu einem sich in der Blockstation befindenden Blockstück definiert positionierbar und während des Aufblockens in der definierten Relativlage zum Blockstück unter Belassung eines Blockmaterial-Aufnahmespalts zwischen Werkstück und Blockstück haltbar ist.

### BEZUGSZEICHENLISTE

- 10: Blockvorrichtung
- 12: Messstation
- 14: Blockstation
- 16: Haltekopf
- 18: Transporteinrichtung
- 20: Kreuztischanordnung
- 22: erster Schlitten
- 24, 24': Dosiereinrichtung
- 26: Belichtungseinrichtung
- 28, 28': Dosierkopf
- 30: Ventil
- 32, 32': Zufuhreinrichtung
- 34: Aufnahmeraum
- 36: Magazin
- 38: Gehäuse
- 40: optische Messeinrichtung
- 42: mechanische Messeinrichtung
- 44: zweiter Schlitten
- 46: Auflage
- 48: Greifer
- 50: Ladeeinheit
- 52: Ladearm
- 54: Längsachse
- 56: Ladekopf
- 58: Sauger
- 60: Schwenkachse
- 62: Vertikaleinheit
- 64: Blockstückmagazin
- 66: Linsen-Spanneinheit
- 68: Saugerlippe
- 70: Stiftrelief
- 72, 72': erster Spannring / Spannring
- 74, 74': Spannbacken
- 76: zweiter Spannring
- 78: Spannvorsprung
- 80: obere Platte
- 82: untere Platte
- 84: Kugelkalottengelenk
- 86: Antrieb
- 88: Zugfeder
- 90: Antrieb
- 92: Hohlwelle
- 94: Spreizdorn
- 96: Hubzylinder
- 98: Hülse
- 100: Basis
- 102: Horizontalschlitten
- 104: Vertikalschlitten
- 106: Führungsschiene
- 108: Führungsschiene
- 110: Antrieb
- 112: Antrieb
- 114: LED-Lampe
- 116: Klappe
- 118: Verschlusszylinder
- 120: Klemmabschnitt
- 122: Dichtelement
- 124: Anschlussstutzen
- 126: Druckluftanschluss
- 128: Sensor
- 130: Rastelement
- 132: Wandabschnitt
- 134: Sperrklinke
- 136: Zugfeder
- 138: Schrägfläche
- 140: Arbeitskasten
- 142: Förderband
- 144: Hubzylinder
- 146: Hubzylinder
- 148: Sauger
- 150: Magazinstange
- 152: Kodierungsleiste
- 154: Magazinachse
- 156: Klemmfeder
- 158: T-Nut
- 160: Magazinstangenträger
- 162: Vertikal-Pneumatikzylinder
- 164: Horizontal-Pneumatikzylinder
- 166: Sauger
- 168: Fasspumpeneinheit
- 170: Aufnahmeraum
- 172: Grundplatte
- 174: Aufnahmebehälter
- 176: Deckplatte
- 178: Druckregler
- 180: Manometer
- 182: Pneumatikzylinder
- 184: Folgeplatte
- 186: Pumpenausgang
- 188: Schlauch
- 190: Befestigungswinkel
- 192: Nadelsitzventil
- 194: Pneumatikzylinder
- 196: Ventilkopf
- 198: Durchflussmesser
- 200: Aussparung
- 202: Auflagering
- 204: Blattfederelement
- 206: Spalt
- A: Kippachse
- B: Kippachse
- C: Drehachse
- X: Linearachse
- Y: Linearachse
- Z: Linearachse

- E: Ringsteg
- F1: zu blockende Werkstückfläche
- F2: Kontaktfläche
- G: Blockmaterial-Aufnahmespalt
- L: Werkstück / Brillenglas
- K: Blockmaterial-Kartusche
- M: Blockmaterial
- P: Kolben der Blockmaterial-Kartusche
- R: Referenzfläche
- S, S': Blockstück
- V: Spannvorsprung

## Patentansprüche

1. Vorrichtung (10) zum Blocken von Werkstücken, insbesondere Brillengläsern (L), für deren Bearbeitung und/oder Beschichtung, mit
einer Auflage (46) zum Auflegen des zu blockenden Werkstücks (L),
einer Blockstation (14), in der das Werkstück (L) mittels eines temporär verformbaren, nämlich lichtaushärtenden oder thermoplastischen Blockmaterials (M) auf einem Blockstück (S) aufblockbar ist, und
einer einen Haltekopf (16) für das Werkstück (L) aufweisenden Transporteinrichtung (18), mittels der eine Relativbewegung zwischen dem am Haltekopf (16) gehaltenen Werkstück (L) einerseits und der Auflage (46) sowie der Blockstation (14) andererseits erzeugbar ist und die zwei lagegeregelte Bewegungsachsen (X, Z) aufweist,
**dadurch gekennzeichnet, dass** die Transporteinrichtung (18) vier weitere lagegeregelte Bewegungsachsen (Y, A, B, C), also insgesamt sechs lagegeregelte Bewegungsachsen (X, Y, Z, A, B, C) aufweist, nämlich drei im Wesentlichen senkrecht zueinander stehende lagegeregelte Linearachsen (X, Y, Z) und drei im Dreh-winkel geregelte Dreh- bzw. Kippachsen (A, B, C) um die Linearachsen (X, Y, Z), mittels der das Werkstück (L) unter Berücksichtigung von Orientierung und Geometrieinformationen des Werkstücks (L) relativ zu einem sich in der Blockstation (14) befindenden Blockstück (S) definiert positionierbar und während des Aufblockens in der definierten Relativlage zum Blockstück (S) unter Belassung eines Blockmaterial-Aufnahmespalts (G) zwischen Werkstück (L) und Blockstück (S) haltbar ist.

2. Vorrichtung (10) nach Anspruch 1, **dadurch gekennzeichnet, dass** der Haltekopf (16) für das.Werkstück (L) im Raum im Drehwinkel geregelt dreh- und kippbar (Kippachsen A, B, Drehachse C) ausgebildet ist.

3. Vorrichtung (10) nach Anspruch 1 oder 2, **dadurch gekennzeichnet, dass** der Haltekopf (16) für das Werkstück (L) vermittels einer Kreuztischanordnung (20) der Transporteinrichtung (18) in Richtung auf ein sich in der Blockstation (14) befindendes Blockstück (S) zu und davon weg (Z-Achse) sowie quer dazu (X-Achse) lagegeregelt bewegbar ist.

4. Vorrichtung (10) nach einem der vorhergehenden Ansprüche, **dadurch gekennzeichnet, dass** die Blockstation (14) auf einem ersten Schlitten (22) der Transporteinrichtung (18) angeordnet ist, der quer (Y-Achse) zum Haltekopf (16) für das Werkstück (L) lagegeregelt bewegbar ist.

5. Vorrichtung (10) nach Anspruch 4, **gekennzeichnet durch**
eine Dosiereinrichtung (24, 24'), mittels der das lichtaushärtende Blockmaterial (M) auf ein sich in der Blockstation (14) befindendes Blockstück (S) aufbringbar ist, und
eine von der Dosiereinrichtung (24, 24') beabstandete Belichtungseinrichtung (26), mittels der das Blockmaterial (M) zum Aushärten belichtbar ist,
wobei die Blockstation (14) vermittels des ersten Schlittens (22) der Transporteinrichtung (18) von der Dosiereinrichtung (24, 24') zur Belichtungseinrichtung (26) und umgekehrt bewegbar ist.

6. Vorrichtung (10) nach Anspruch 5, **dadurch gekennzeichnet, dass** die Dosiereinrichtung (24) einen Dosierkopf (28) aufweist, der in Richtung auf ein sich in der Blockstation (14) befindendes Blockstück (S) zu und davon weg bewegbar, vorzugsweise verschwenkbar ist, so dass in einer dem Blockstück (S) nahen Position des Dosierkopfs (28) das Blockmaterial (M) zuführbar und die Zufuhr des Blockmaterials (M) unter Wegbewegen des Dosierkopfs (28) aus der dem Blockstück (S) nahen Position in eine vom Blockstück (S) entfernte Position beendbar ist.

7. Vorrichtung (10) nach Anspruch 5, **dadurch gekennzeichnet, dass** die Dosiereinrichtung (24') einen Dosierkopf (28') aufweist, der ein Nadelsitzventil (192) umfasst, welches über einen Durchflussmesser (198) an eine Zufuhreinrichtung (32') für das Blockmaterial (M) angeschlossen ist, die ihrerseits eine Fasspumpeneinheit (168) aufweist, um das Blockmaterial (M) aus einem auswechselbaren Aufnahmebehälter (174) zu fördern.

8. Vorrichtung (10) nach einem der Ansprüche 4 bis 7, **dadurch gekennzeichnet, dass** die Blockstation (14) vermittels des ersten Schlittens (22) der Transporteinrichtung (18) in eine Übergabeposition verfahrbar ist, in der ein Blockstück (S) in die Blockstation (14) einsetzbar oder ein auf ein Blockstück (S) geblocktes Werkstück (L) aus der Blockstation (14) herausnehmbar ist.

9. Vorrichtung (10) nach einem der vorhergehenden Ansprüche, **gekennzeichnet durch** eine Messstation (12) mit einer optischen Messeinrichtung (40) zur Lageerkennung des Werkstücks (L) und einer hiervon beabstandeten mechanischen Messeinrichtung (42) zum vollflächigen Messen der zu blockenden Werkstückfläche (F1), wobei das zu blockende Werkstück (L) vermittels des Haltekopfs (16) der Transporteinrichtung (18) von der optischen Messeinrichtung (40) zur mechanischen Messeinrichtung (42) transportierbar ist.

10. Vorrichtung (10) nach Anspruch 9, **dadurch gekennzeichnet, dass** die Transporteinrichtung (18) einen zweiten Schlitten (44) aufweist, der die Auflage (46) mit einem Greifer (48) zum zentrierenden Fassen des Werkstücks (L) trägt, wobei die Auflage (46) mit dem Greifer (48) vermittels des zweiten Schlittens (44) von der optischen Messeinrichtung (40) in eine Übergabeposition, in der ein Werkstück (L) auf die Auflage (46) auflegbar ist, und umgekehrt zur optischen Messeinrichtung (40) zurück bewegbar ist.

11. Vorrichtung (10) nach einem der vorhergehenden Ansprüche, **gekennzeichnet durch** eine Ladeeinheit (50), mittels der sowohl die Werkstücke (L) als auch die Blockstücke (S) der Vorrichtung (10) zuführbar und zudem die auf die Blockstück (S) geblockten Werkstücke (L) aus der Vorrichtung (10) entnehmbar sind.

12. Vorrichtung (10) nach Anspruch 11, **dadurch gekennzeichnet, dass** die Ladeeinheit (50) einen Ladearm (52) mit einer Längsachse (54) aufweist, an dem ein Ladekopf (56) mit wenigstens einem Sauger (58) um die Längsachse (54) des Ladearms (52) um 180° verdrehbar montiert ist, wobei der Ladearm (52) selbst um eine zur Längsachse (54) des Ladearms (52) senkrecht verlaufende Schwenkachse (60) schwenkbar und entlang der Schwenkachse (60) linear verstellbar ist.

13. Vorrichtung (10) nach den Ansprüchen 10 und 11 oder 10 und 12, **gekennzeichnet durch** eine Vertikaleinheit (62) zur Übernahme eines zu blockenden Werkstücks (L) von der Ladeeinheit (50) und Übergabe des zu blockenden Werkstücks (L) an die sich in der Übergabeposition befindende Auflage (46) mit dem Greifer (48) auf dem zweiten Schlitten (44) der Transporteinrichtung (18).

14. Vorrichtung (10) nach Anspruch 8 und einem der Ansprüche 11 bis 13, **gekennzeichnet durch** ein Blockstückmagazin (64) zur Aufnahme einer Mehrzahl von ggf. verschiedenen Blockstücken (S), aus dem ein vorbestimmtes Blockstück (S) automatisch vereinzelbar und an die Ladeeinheit (50) übergebbar ist, worauf das Blockstück (S) vermittels der Ladeeinheit (50) in die sich in der Übergabeposition befindende Blockstation (14) auf dem ersten Schlitten (22) der Transporteinrichtung (18) einsetzbar ist.

15. Vorrichtung (10) nach einem der vorhergehenden Ansprüche, **dadurch gekennzeichnet, dass** der Haltekopf (16) für das Werkstück (L) eine Linsen-Spanneinheit (66) mit einer Saugerlippe (68) zum Ansaugen des Werkstücks (L) aufweist, die ein Stiftrelief (70) umschließt, welches einer Kontaktfläche (F2) des Werkstücks (L) anpassbar und wahlweise klemmbar ist, um das Werkstück (L) an dessen Kontaktfläche (F2) möglichst vollflächig abzustützen.

## Claims

1. Device (10) for blocking workpieces, particularly spectacle lenses (L), for processing and/or coating thereof, comprising:
a support (46) for supporting the workpiece (L) to be blocked,
a blocking station (14), in which the workpiece (L) can be blocked on a block piece (S) by means of a temporarily deformable blocking material (M), namely a blocking material curable by light or a thermoplastic blocking material, and
a transport device (18), which comprises a holding head (16) for the workpiece (L) and by means of which a relative movement between the workpiece (L) held at the holding head (16) on the one hand and the support (46) as well as the blocking station (14) on the other hand can be produced, said transport device comprising two position controlled movement axes (X, Z),
**characterized in that** the transport device (18) has four further position controlled movement axes (Y, A, B, C), thus six position controlled movement axes (X, Y, Z, A, B, C) in total, namely three substantially mutually perpendicular linear axes (X, Y, Z), which are controlled in position, and three rotational or tilt axes (A, B, C), which are controlled in rotational angle, about the linear axes (X, Y, Z), by means of which the workpiece (L) is positionable in defined manner relative to a block piece (S) disposed in the blocking station (14) with consideration of orientation and of geometry data of the workpiece (L) and can be held during the blocking in the defined relative position with respect to the block piece (S) while leaving a blocking material receiving gap (G) between workpiece (L) and block piece (S).

2. Device (10) according to claim 1, **characterized in that** the holding head (16) for the workpiece (L) is constructed to be rotatable and tiltable (tilt axes A, B, rotational axis C) in three-dimensions with control in rotational angle.

3. Device (10) according to claim 1 or 2, **characterized in that** the holding head (16) for the workpiece (L) is movable, with control in position, by means of a cross-table arrangement (20) of the transport device (18) towards and away from (Z axis) a block piece (S), which is disposed in the blocking station (14), as well as transversely thereto (X axis).

4. Device (10) according to any one of the preceding claims, **characterized in that** the blocking station (14) is arranged on a first slide (22) of the transport device (18), which slide is movable, with control in position, transversely (Y axis) with respect to the holding head (16) for the workpiece (L).

5. Device (10) according to claim 4, **characterized by**
a metering device (24, 24'), by means of which the blocking material (M) curable by light can be applied to a block piece (S) disposed in the blocking station (14), and
an exposure device (26), which is spaced from the metering device (24, 24') and by means of which the blocking material (M) can be exposed to light for curing,
wherein the blocking station (14) is movable by means of the first slide (22) of the transport device (18) from the metering device (24, 24') to the exposure device (26) and conversely.

6. Device (10) according to claim 5, **characterized in that** the metering device (24) comprises a metering head (28), which is movable, preferably pivotable, in direction towards a block piece (S), which is disposed in the blocking station (14), and away therefrom so that the blocking material (M) can be fed in a position of the metering head (28) near the block piece (S) and the feed of the blocking material (M) can be terminated under movement of the metering head (28) from the position near the block piece (S) to a position remote from the block piece (S).

7. Device (10) according to claim 5, **characterized in that** the metering device (24') comprises a metering head (28') including a needle seat valve (192), which is connected by way of a throughflow meter (198) with a feed device (32') for the blocking material (M), which feed device in turn comprises a drum pumping unit (168) for conveying the blocking material (M) from an exchangeable receiving container (174).

8. Device (10) according to any one of claims 4 to 7, **characterized in that** the blocking station (14) is movable by means of the first slide (22) of the transport device (18) into a transfer position in which a block piece (S) is insertable into the blocking station (14) or a workpiece (L) blocked on a block piece (S) is removable from the blocking station (14).

9. Device (10) according to any one of the preceding claims, **characterized by** a measuring station (12) with an optical measuring device (40) for positional recognition of the workpiece (L) and a mechanical measuring device (42), which is spaced therefrom, for whole-area measurement of the workpiece surface (F1) to be blocked, wherein the workpiece (L) to be blocked is transportable by means of the holding head (16) of the transport device (18) from the optical measuring device (40) to the mechanical measuring device (42).

10. Device (10) according to claim 9, **characterized in that** the transport device (18) comprises a second slide (44) which carries the support (46) with a gripper (48) for centering gripping of the workpiece (L), wherein the support (46) together with the gripper (48) is movable by means of the second slide (44) from the optical measuring device (40) to a transfer position, in which a workpiece (L) can be placed on the support (46), and conversely back to the optical measuring device (40).

11. Device (10) according to any one of the preceding claims, **characterized by** a loading unit (50) by means of which not only the workpieces (L), but also the block pieces (S) can be fed to the device (10) and in addition the workpieces (L) blocked on the block pieces (S) can be removed from the device (10).

12. Device (10) according to claim 11, **characterized in that** the loading unit (50) comprises a loading arm (52) with a longitudinal axis (54), on which a loading head (56) with at least one sucker (58) is mounted to be rotatable through 180° about the longitudinal axis (54) of the loading arm (52), wherein the loading arm (52) is itself pivotable about a pivot axis (60), which extends perpendicularly to the longitudinal axis (54) of the loading arm (52), and is linearly adjustable along the pivot axis (60).

13. Device (10) according to claims 10 and 11 or claims 10 and 12, **characterized by** a vertical unit (62) for taking over a workpiece (L), which is to be blocked, from the loading unit (50) and transferring the workpiece (L), which is to be blocked, to the support (46), which is disposed in the transfer position, with the gripper (48) on the second slide (44) of the transport device (18).

14. Device (10) according to claim 8 and any one of claims 11 to 13, **characterized by** a block piece magazine (64) for receiving a plurality of optionally different block pieces (S), from which a predetermined block piece (S) can be automatically separated and transferred to the loading unit (50), whereupon the block piece (S) is insertable by means of the loading unit (50) into the blocking station (14), which is disposed in the transfer position, on the first slide (22) of the transport device (18).

15. Device (10) according to any one of the preceding claims, **characterized in that** the holding head (16) for the workpiece (L) comprises a lens clamping unit (66) with a sucker lip (68) for sucking on the workpiece (L), the lip surrounding a pin relief (70) which can be adapted to a contact surface (F2) of the workpiece (L) and selectably clamped in order to support the workpiece (L) at the contact surface (F2) thereof over as much as possible of the full area.

## Revendications

1. Installation (10) pour l'ablocage ou le glantage de pièces d'oeuvre, notamment des verres de lunettes (L), en vue de leur usinage et/ou de leur revêtement, l'installation comprenant
un support d'appui (46) où peut être déposée la pièce d'oeuvre (L) à soumettre au glantage,
un poste de glantage (14) dans lequel la pièce d'oeuvre (L) peut être bloquée par glantage sur une pièce de glantage (S), au moyen d'un matériau de glantage (M) déformable temporairement, à savoir un matériau photo-durcissable ou thermoplastique, et
un dispositif de transport (18) présentant une tête de maintien (16) pour la pièce d'oeuvre (L), au moyen duquel il est possible de produire un mouvement relatif entre la pièce d'oeuvre (L) maintenue sur la tête de maintien (16) d'une part, et le support d'appui (46) ainsi que le poste de glantage (14) d'autre part, et qui présente deux axes de déplacement (X, Z) régulés en position,
**caractérisée en ce que** le dispositif de transport (18) présente quatre autres axes de déplacement (Y, A, B, C) régulés en position, c'est-à-dire au total six axes de déplacement (X, Y, Z, A, B, C) régulés en position, à savoir trois axes linéaires (X, Y, Z) sensiblement perpendiculaires les uns aux autres et régulés en position, et trois axes de rotation ou de basculement (A, B, C) régulés en angle de rotation autour des axes linéaires (X, Y, Z), au moyen desquels la pièce d'oeuvre (L) peut, en tenant compte de l'orientation et d'informations géométriques de la pièce d'oeuvre (L), être positionnée de manière définie par rapport à une pièce de glantage (S) se trouvant dans le poste de glantage (14), et peut être maintenue, pendant l'ablocage par glantage, dans la position relative définie par rapport à la pièce de glantage (S) en laissant libre un interstice de réception de matériau de glantage (G) entre la pièce d'oeuvre (L) et la pièce de glantage (S).

2. Installation (10) selon la revendication 1, **caractérisée en ce que** la tête de maintien (16) pour la pièce d'oeuvre (L) est configurée de manière à être rotative et basculante (axes de basculement A, B, axe de rotation C) de manière régulée en angle de rotation, dans l'espace.

3. Installation (10) selon la revendication 1 ou la revendication 2, **caractérisée en ce que** la tête de maintien (16) pour la pièce d'oeuvre (L) est déplaçable de manière régulée en position, au moyen d'un agencement de chariots croisés (20) du dispositif de transport (18), en direction d'une pièce de glantage (S) se trouvant dans le poste de glantage (14) et de manière à s'éloigner de celle-ci (axe Z), ainsi que transversalement à ce mouvement de déplacement (axe X).

4. Installation (10) selon l'une des revendications précédentes, **caractérisée en ce que** le poste de glantage (14) est agencé sur un premier chariot (22) du dispositif de transport (18), qui est déplaçable de manière régulée en position, transversalement (axe Y) par rapport à la tête de maintien (16) pour la pièce d'oeuvre (L).

5. Installation (10) selon la revendication 4, **caractérisée par**
un dispositif de dosage (24, 24') au moyen duquel il est possible d'appliquer un matériau de glantage (M) photo-durcissable sur une pièce de glantage (S) se trouvant dans le poste de glantage (14), et
un dispositif d'exposition lumineuse (26) espacé du dispositif de dosage (24, 24'), au moyen duquel il est possible d'exposer le matériau de glantage (M) à la lumière,
le poste de glantage (14) pouvant être déplacé, au moyen du premier chariot (22) du dispositif de transport (18), du dispositif de dosage (24, 24') vers le dispositif d'exposition lumineuse (26) et inversement.

6. Installation (10) selon la revendication 5, **caractérisée en ce que** le dispositif de dosage (24) présente une tête de dosage (28), qui peut être déplacée vers une pièce de glantage (S) se trouvant dans le poste de glantage (14) et de manière à s'en éloigner, de préférence par pivotement, de sorte que dans une position de la tête de dosage (28), proche de la pièce de glantage (S), il est possible d'amener le matériau de glantage (M), et l'amenée de matériau de glantage (M) peut être achevée en éloignant la tête de dosage (28) de la position proche de la pièce de glantage (S) vers une position éloignée de la pièce de glantage (S).

7. Installation (10) selon la revendication 5, **caractérisée en ce que** le dispositif de dosage (24') présente une tête de dosage (28') comprenant une soupape à siège et pointeau (192), qui est raccordée, par l'intermédiaire d'un débitmètre (198), à un dispositif d'alimentation (32') pour le matériau de glantage (M), qui pour sa part présente une unité de pompe électrique portative (168), en vue de refouler le matériau de glantage (M) hors d'un réservoir (174) interchangeable.

8. Installation (10) selon l'une des revendications 4 à 7, **caractérisée en ce que** le poste de glantage (14) peut être déplacé au moyen du premier chariot (22) du dispositif de transport (18), dans une position de transfert dans laquelle une pièce de glantage (S) peut être introduite dans le poste de glantage (14), ou dans laquelle une pièce d'oeuvre (L) abloquée sur une pièce de glantage (S) peut être extraite du poste de glantage (14).

9. Installation (10) selon l'une des revendications précédentes, **caractérisée par** un poste de mesure (12) comprenant un dispositif de mesure optique (40) pour la reconnaissance de position de la pièce d'oeuvre (L), et, à distance de celui-ci, un dispositif de mesure mécanique (42) pour la mesure de surface globale de la surface de pièce d'oeuvre à abloquer (F1), la pièce d'oeuvre (L) à abloquer pouvant être transportée du dispositif de mesure optique (40) au dispositif de mesure mécanique (42), au moyen de la tête de maintien (16) du dispositif de transport (18).

10. Installation (10) selon la revendication 9, **caractérisée en ce que** le dispositif de transport (18) présente un deuxième chariot (44), qui porte le support d'appui (46) avec une pince de préhension (48) pour la saisie centrée de la pièce d'oeuvre (L), le support d'appui (46) avec la pince de préhension (48) pouvant être déplacé, au moyen du deuxième chariot (44), du dispositif de mesure optique (40) dans une position de transfert, dans laquelle une pièce d'oeuvre (L) peut être déposée sur le support d'appui (46), et inversement en retour vers le dispositif de mesure optique (40).

11. Installation (10) selon l'une des revendications précédentes, **caractérisée par** une unité de chargement (50) au moyen de laquelle aussi bien les pièces d'oeuvre (L) que les pièces de glantage (S) peuvent être amenées à l'installation (10), et grâce à laquelle les pièces d'oeuvre (L) abloquées sur les pièces de glantage (S) peuvent en outre être prélevées de l'installation (10).

12. Installation (10) selon la revendication 11, **caractérisée en ce que** l'unité de chargement (50) comporte un bras de chargement (52) présentant un axe longitudinal (54), sur lequel est montée une tête de chargement (56) avec une ventouse d'aspiration (58), en pouvant tourner de 180° autour de l'axe longitudinal (54) du bras de chargement (52), le bras de chargement (52) pouvant pour sa part pivoter autour d'un axe de pivotement (60), qui s'étend perpendiculairement à l'axe longitudinal (54) du bras de chargement (52), et être déplacé linéairement le long de l'axe de pivotement (60).

13. Installation (10) selon les revendications 10 et 11 ou 10 et 12, **caractérisée par** une unité verticale (62) pour la prise en charge d'une pièce d'oeuvre (L) à abloquer à partir de l'unité de chargement (50), et le transfert de la pièce d'oeuvre (L) à abloquer, au support d'appui (46) avec la pince de préhension (48) se trouvant dans la position de transfert sur le deuxième chariot (44) du dispositif de transport (18).

14. Installation (10) selon la revendication 8 et l'une des revendications 11 à 13, **caractérisée par** un magasin de pièces de glantage (64) destiné à recevoir un grand nombre de pièces de glantage (S), le cas échéant différentes, à partir duquel une pièce de glantage (S) prédéterminée peut être automatiquement séparée et transférée à l'unité de chargement (50), à la suite de quoi la pièce de glantage (S) peut, au moyen de l'unité de chargement (50), être introduite dans le poste de glantage (14) se trouvant dans la position de transfert sur le premier chariot (22) du dispositif de transport (18).

15. Installation (10) selon l'une des revendications précédentes, **caractérisée en ce que** la tête de maintien (16) pour la pièce d'oeuvre (L) comprend une unité de serrage de lentille (66) avec une lèvre de ventouse (68), qui est destinée à aspirer la pièce d'oeuvre (L) et entoure un relief à picots (70) susceptible de s'adapter à une surface de contact (F2) de la pièce d'oeuvre (L) et susceptible d'y être serré, en vue de soutenir la pièce d'oeuvre (L) sur sa surface de contact (F2) selon la plus grande surface possible.
